# EUROPÄISCHE PATENTANMELDUNG

(11) **EP 4 706 891 A2**
(43) Veröffentlichungstag der Anmeldung: **11.03.2026**
(21) Anmeldenummer: 26154095.9
(22) Anmeldetag: 08.07.2024
(51) Int. Cl.: B25F 5/00, B25F 5/02, B27B 17/00

(54) **MOTORKETTENSÄGE ODER TRENNSCHLEIFER**

(30) Priorität: 10.07.2023 DE 102023118171; 10.07.2023 DE 102023118179; 10.07.2023 DE 102023118186
(62) Teilanmeldung aus: 24187143.3
(71) Anmelder: Andreas Stihl AG & Co. KG, 71336 Waiblingen (DE)
(72) Erfinder: Heinzelmann, Georg, 71364 Winnenden (DE); Renz, Johann-Sebastian, 72810 Gomaringen (DE); Weber, Marco, 71522 Backnang (DE)
(74) Vertreter: Karzel, Philipp

(57) **Zusammenfassung**

Die Erfindung betrifft eine Motorkettensäge oder einen Trennschleifer mit einem Werkzeug (6) mit einer Werkzeugebene (E) und einem Bediengriff (34), wobei eine Längsrichtung (50) in Richtung von dem Bediengriff (34) zu dem Werkzeug (6) verläuft. wobei das Arbeitsgerät (1) ein Außengehäuse (1) mit einer Gehäuseöffnung (15) zum Ansaugen von Kühlluft in das Außengehäuse (5), einen Elektromotor (7), der in dem Außengehäuse (5) angeordnet ist und zum Antrieb des Werkzeugs (6) dient und einen Luftfilter (12), der an oder in der Gehäuseöffnung (15) angeordnet ist umfasst. Die Motorkettensäge oder der Trennschleifer kann in einer Abstellposition auf einer Horizontalebene abgestellt werden kann. Das Außengehäuse (5) besitzt einen in der Abstellposition der Horizontalebene zugewandten Boden (17), eine dem Boden (17) gegenüberliegende Gehäusedecke (20) und eine Seitenfläche (21), die die Gehäusedecke (20) und den Boden (17) miteinander verbindet und das Arbeitsgerät (1) entlang der Längsrichtung (50) in Richtung senkrecht zur Werkzeugebene (E) begrenzt. Der Luftfilter (12) ist an der Seitenfläche (21) des Außengehäuses (5) angeordnet. Das Außengehäuse (5) besitzt in einer Seitenansicht senkrecht auf die Werkzeugebene (E) eine Gehäuseaußenkontur (8), die in einer gedachten Projektion in Richtung senkrecht zur Werkzeugebene (E) auf die Werkzeugebene (E) eine gedachte Gehäusefläche (9) begrenzt. Der Luftfilter (12) besitzt in einer gedachten Projektion in Richtung senkrecht zur Werkzeugebene (E) auf die Werkzeugebene (E) eine Filteraußenkontur (38), die eine gedachte Filterfläche (39) begrenzt. Die Filterfläche (39) beträgt mindestens 5% der Gehäusefläche (9).

## Beschreibung

Die Erfindung betrifft eine Motorkettensäge oder einen Trennschleifer mit einem Werkzeug mit einer Werkzeugebene und einem Bediengriff, wobei eine Längsrichtung in Richtung von dem Bediengriff zu dem Werkzeug verläuft. Das Arbeitsgerät umfasst ein Außengehäuse mit einer Gehäuseöffnung zum Ansaugen von Kühlluft in das Außengehäuse, einen Elektromotor zum Antrieb des Werkzeugs, der in dem Außengehäuse angeordnet ist und einen Luftfilter, der an oder in der Gehäuseöffnung angeordnet ist. Die Motorkettensäge oder der Trennschleifer kann in einer Abstellposition auf einer Horizontalebene abgestellt werden, wobei das Außengehäuse einen in der Abstellposition der Horizontalebene zugewandten Boden besitzt, wobei das Außengehäuse eine dem Boden gegenüberliegende Gehäusedecke aufweist, wobei das Außengehäuse eine Seitenfläche aufweist, die die Gehäusedecke und den Boden miteinander verbindet und das Arbeitsgerät entlang der Längsrichtung in Richtung senkrecht zur Werkzeugebene begrenzt.

Im Folgenden werden die Begriffe Motorkettensäge und Trennschleifer unter dem Begriff Arbeitsgerät zusammengefasst. Mit Arbeitsgerät ist also demnach eine Motorkettensäge oder ein Trennschleifer bezeichnet.

Bei derartigen Arbeitsgeräten wird Kühlluft in das Außengehäuse geführt, um den Elektromotor zu kühlen. Damit der Elektromotor vor Schmutz geschützt ist, ist der Luftfilter vorgesehen. Nach einer bestimmten Einsatzzeit, sollte der Luftfilter gereinigt oder getauscht werden. Je nach Einsatzbedingungen kann diese Einsatzzeit kürzer oder länger sein. Der Filter sollte dann in entsprechenden zeitlichen Intervallen gereinigt oder getauscht werden.

Der Erfindung liegt die Aufgabe zugrunde, eine gattungsgemäße Motorkettensäge oder einen gattungsgemäßen Trennschleifer derart weiterzubilden, dass der Luftfilter erst nach einer möglichst langen Einsatzzeit des Arbeitsgeräts gereinigt oder getauscht werden muss.

Diese Aufgabe wird durch ein Arbeitsgerät mit den Merkmalen des Anspruchs 1 gelöst.

Bei der erfindungsgemäßen Lösung gemäß Anspruch 1 ist vorgesehen, dass der Luftfilter an der Seitenfläche des Außengehäuses angeordnet ist. Dadurch ist ausreichend Platz für die Anordnung des Luftfilters vorhanden. Der Luftfilter kann groß gestaltet sein. Der Luftfilter kann eine große Filterfläche aufweisen. Dadurch kann dieselbe Luftmenge auf einer größeren Fläche gefiltert werden. Dadurch ist der Schmutzeintrag pro Flächeneinheit für den Luftfilter geringer. Dadurch muss der Luftfilter erst nach einer langen Einsatzzeit getauscht werden. Aufgrund der seitlichen Anordnung des Luftfilters an der Seitenfläche des Außengehäuses ist der Luftfilter auf komfortable Weise zugänglich.

Das Außengehäuse besitzt in einer Seitenansicht senkrecht auf die Werkzeugebene eine Gehäuseaußenkontur. Die Gehäuseaußenkontur begrenzt in einer gedachten Projektion auf die Werkzeugebene eine gedachte Gehäusefläche. Die Projektion erfolgt in Richtung senkrecht zur Werkzeugebene. Der Luftfilter besitzt in einer gedachten Projektion auf die Werkzeugebene eine Filteraußenkontur. Die Projektion erfolgt in Richtung senkrecht zur Werkzeugebene. Die Filteraußenkontur begrenzt eine gedachte Filterfläche in der Werkzeugebene. Die Filterfläche beträgt mindestens 5%, insbesondere mindestens 10%, insbesondere mindestens 11%, insbesondere mindestens 15%, insbesondere mindestens 18% der Gehäusefläche.

Dadurch, dass die Filterfläche mindestens 5%, insbesondere mindestens 10%, insbesondere mindestens 11%, insbesondere mindestens 15%, insbesondere mindesten 18% der Gehäusefläche beträgt, ist die Filterfläche besonders groß. Dadurch kann sich angesaugter Schmutz zum einen auf eine große Fläche verteilen, und zum anderen wird die Ansaugkraft auf eine größere Fläche verteilt. Die Verteilung des Schmutzes auf eine größere Fläche erhöht die Standzeit des Filters. Wenn sich die gleiche Menge Schmutz auf eine größere Fläche verteilen kann, ist die dabei entstehende Schmutzschichtdicke gering. Dadurch kann der Luftfilter in größeren Intervallen getauscht werden. Dadurch, dass sich die Ansaugkraft auf eine größere Filterfläche verteilen kann, ist der Ansaugunterdruck gering und damit auch die Ansauggeschwindigkeit und die Strömungsgeschwindigkeit der angesaugten Kühlluft gering. Dies bewirkt eine reduzierte Schmutzmitnahme. Die Anzahl von der Kühlluft mitgenommener Partikel ist proportional zum Quadrat der Strömungsgeschwindigkeit der Kühlluft. Wenn die Strömungsgeschwindigkeit reduziert ist, ist auch die Anzahl an mitgenommenen Schmutzpartikeln reduziert. Durch die geringere Verschmutzung muss der Luftfilter erst nach einer langen Einsatzzeit getauscht werden.

In zweckmäßiger Weiterbildung der Erfindung ist vorgesehen, dass die Gehäuseöffnung an der Seitenfläche des Außengehäuses angeordnet ist. Die Gehäuseöffnung besitzt in einer gedachten Projektion in Richtung senkrecht zur Werkzeugebene auf die Werkzeugebene eine Öffnungsaußenkontur. Die Öffnungsaußenkontur begrenzt in der Werkzeugebene eine gedachte Öffnungsfläche. Insbesondere beträgt die Öffnungsfläche mindestens 5%, insbesondere mindestens 10%, insbesondere mindestens 11% der Gehäusefläche. Dadurch kann ein Luftfilter mit einer großen Filterfläche verwendet werden. Dadurch ist die Standzeit erhöht und die Schmutzmitnahme verringert.

Die Filterfläche beträgt insbesondere mindestens 60 cm², insbesondere mindestens 70 cm², insbesondere mindestens 80 cm², insbesondere mindestens 85 cm², insbesondere mindestens 100 cm², insbesondere mindestens 125 cm². Dadurch, dass die Filterfläche so groß ist, wird über eine große Fläche Luft ins Arbeitsgerät angesaugt. Dadurch kann sich mit der Kühlluft angesaugter Schmutz auf einer größeren Fläche verteilen. Insbesondere können sich mit der Kühlluft angesaugte Partikel auf einer größeren Fläche verteilen. Dadurch setzt der Filter nicht so schnell zu. Die Standzeit des Filters ist durch die große Filterfläche des Luftfilters erhöht.

Bei einer alternativen Lösung, die einen eigenständigen erfinderischen Gedanken darstellt, ist vorgesehen, dass bei der Motorkettensäge oder dem Trennschleifer mit einem Werkzeug mit einer Werkzeugebene und einem Bediengriff eine Längsrichtung in Richtung von dem Bediengriff zu dem Werkezeug verläuft. Die Motorkettensäge oder der Trennschleifer umfasst eine Eintrittsöffnung für den Eintritt von Kühlluft in die Motorkettensäge oder in den Trennschleifer, ein Außengehäuse und einen Elektromotor zum Antrieb des Werkzeugs, der in dem Außengehäuse angeordnet ist. Die Motorkettensäge oder der Trennschleifer umfasst einen Luftfilter zur Filterung der Kühlluft. Der Luftfilter ist ausschließlich auf einer ersten Seite der Werkzeugebene angeordnet. Die Eintrittsöffnung ist so angeordnet, dass Kühlluft in Längsrichtung durch die Eintrittsöffnung strömen kann.

Das Außengehäuse besitzt in einer Seitenansicht senkrecht auf die erste Seite der Werkzeugebene eine Gehäuseaußenkontur. Die Gehäuseaußenkontur begrenzt in einer gedachten Projektion auf die Werkzeugebene in der Werkzeugebene eine gedachte Gehäusefläche. Die Projektion erfolgt in Richtung senkrecht zur Werkzeugebene. Erfindungsgemäß ist das Arbeitsgerät in der Seitenansicht senkrecht auf die erste Seite der Werkzeugebene innerhalb der Gehäuseaußenkontur über mindestens 95%, insbesondere über mindestens 97%, insbesondere über mindestens 98,5% der gedachten Gehäusefläche frei von Öffnungen für den Eintritt von Kühlluft in das Arbeitsgerät.

Mit Öffnung in Seitenansicht senkrecht auf die erste Seite der Werkzeugebene ist nur der Teil einer Durchdringungsöffnung für den Eintritt von Kühlluft in das Arbeitsgerät bezeichnet, der in der Seitenansicht senkrecht auf die erste Seite der Werkzeugebene sichtbar ist. Die Durchdringungsöffnung kann tatsächlich größer als die Öffnung sein, ist dann aber in Seitenansicht senkrecht auf die erste Seite der Werkzeugebene von einem Bauteil des Arbeitsgeräts überdeckt.

Wenn die Öffnungen, insbesondere also nur der Teil der Durchdringungsöffnungen für den Eintritt von Kühlluft in das Arbeitsgerät, der in der Seitenansicht senkrecht auf die erste Seite der Werkzeugebene sichtbar ist, in Richtung senkrecht auf die Werkzeugebene auf die Werkzeugebene projiziert werden, beträgt der Flächenanteil der Fläche, der frei von Projektionen der Öffnung ist, in der Gehäusefläche mindestens 95%, insbesondere mindestens 97%, insbesondere mindestens 98,5% der gedachten Gehäusefläche.

Dadurch, dass das Arbeitsgerät in Seitenansicht senkrecht auf die erste Seite der Werkzeugebene weitgehend frei von Öffnungen für den Eintritt von Kühlluft in das Arbeitsgerät ist, ist der Luftfilter gut geschützt vor eindringendem Schmutz. Insbesondere bei einem Einsatz des Arbeitsgeräts, bei dem die Eintrittsöffnungen bezüglich der Vertikalen nach oben zeigen, kann nur wenig Schmutz durch die Eintrittsöffnungen eintreten, der beispielsweise aufgrund der Schwerkraft auf das Arbeitsgerät fällt. Bei der Motorkettensäge ist dies insbesondere bei einem Baumfällschnitt der Fall. Hierbei können Sägespäne, die beim Schneiden mit der Motorkettensäge aufgewirbelt werden und nach unten sinken, oder anderer Schmutz erst gar nicht durch die Eintrittsöffnungen für die Kühlluft in das Arbeitsgerät eintreten und zum Luftfilter gelangen.

Dadurch, dass die Kühlluft in Längsrichtung, also in Richtung von dem hinteren Ende zu dem vorderen Ende des Arbeitsgeräts, durch die Eintrittsöffnung von außen in das Arbeitsgerät strömen kann, liegt die Eintrittsöffnung gut geschützt vor Schmutz, der durch das Werkzeug beim Einsatz des handgeführten Arbeitsgeräts oder auf andere Weise entsteht. Insbesondere zeigt dadurch die Eintrittsöffnung von dem Werkzeug weg. Die Eintrittsöffnung ist bezüglich der Längsrichtung insbesondere vor dem Werkzeug, insbesondere in kleinerem Abstand zu dem Bediengriff als zu dem Werkzeug angeordnet. Die Eintrittsöffnung ist insbesondere dem Werkzeug abgewandt. Auch dadurch gelangt nur wenig Schmutz durch die Eintrittsöffnung für Kühlluft in das Arbeitsgerät. Nur wenig Schmutz dringt zum Luftfilter vor. Dadurch muss der Luftfilter erst nach einer langen Einsatzzeit getauscht werden.

Bei der erfindungsgemäßen Lösungsvariante nach Anspruch 1 müssen die Merkmale der alternativen Lösungsvariante nicht vorgesehen sein. Sämtliche optionale Merkmale können die erfindungsgemäßen Lösungsvariante nach Anspruch 1 und/oder die alternative Lösungsvariante weiterbilden.

Zweckmäßig ist vorgesehen, dass die Motorkettensäge oder der Trennschleifer in einer Abstellposition auf einer Horizontalebene abgestellt werden kann, dass das Außengehäuse einen in der Abstellposition der Horizontalebene zugewandten Boden besitzt, dass das Außengehäuse eine dem Boden gegenüberliegende Gehäusedecke aufweist und dass das Außengehäuse eine Seitenfläche aufweist, die die Gehäusedecke und den Boden miteinander verbindet und das Arbeitsgerät entlang der Längsrichtung in Richtung senkrecht zur Werkzeugebene begrenzt.

Insbesondere ist der Luftfilter an der Seitenfläche des Außengehäuses angeordnet. Der Luftfilter besitzt in einer gedachten Projektion in Richtung senkrecht zur Werkzeugebene auf die Werkzeugebene die Filteraußenkontur, die in der Werkzeugebene die gedachte Filterfläche begrenzt. Insbesondere beträgt die Filterfläche mindestens 5%, insbesondere mindestens 10%, insbesondere mindestens 11%, insbesondere mindestens 15%, insbesondere mindestens 18%, der Gehäusefläche und/oder die Filterfläche beträgt insbesondere mindestens 60 cm², insbesondere mindestens 70 cm², insbesondere mindestens 80 cm², insbesondere mindestens 85 cm², insbesondere mindestens 100 cm², insbesondere mindestens 125 cm².

In besonderer Weiterbildung der Erfindung ist die Eintrittsöffnung in Ansicht auf das Arbeitsgerät in Längsrichtung blickend sichtbar. Insbesondere ist die Eintrittsöffnung in Ansicht auf das Arbeitsgerät in Längsrichtung blickend vollständig unverdeckt. Dadurch kann das Arbeitsgerät durch die Eintrittsöffnung besonders gut Kühlluft anziehen. Kühlluft kann gut und zuverlässig in den Bereich vor der Eintrittsöffnung nachströmen.

Insbesondere die nachfolgend in der Beschreibungseinleitung angeführten Merkmale sind Weiterbildungen sowohl der erfindungsgemäßen Lösung gemäß Anspruch 1 als auch der alternativen erfindungsgemäßen Lösung.

Eine Aufwärtsrichtung erstreckt sich in Richtung quer, insbesondere in Richtung senkrecht zur Längsrichtung. Die Aufwärtsrichtung erstreckt sich parallel zur Werkzeugebene.

In zweckmäßiger Weiterbildung der Erfindung ist vorgesehen, dass der Luftfilter in Aufwärtsrichtung zu der ersten Seitenfläche der Motorkettensäge oder des Trennschleifers hin geneigt ist, so dass sich aufgrund der Schwerkraft Schmutz aus dem Luftfilter lösen und herunterfallen kann. Insbesondere ist der Luftfilter in einem Winkel von mindestens 5° gegen die Aufwärtsrichtung geneigt.

In besonderer Weiterbildung der Erfindung weist das Arbeitsgerät eine untere Eintrittsöffnung für den Eintritt der Kühlluft in das Arbeitsgerät auf. Die untere Eintrittsöffnung ist so angeordnet, dass Kühlluft in Aufwärtsrichtung durch die untere Eintrittsöffnung strömen kann. Aufgrund der unteren Eintrittsöffnung für den Eintritt von Kühlluft in das Arbeitsgerät ist eine zusätzlich Eintrittsöffnung für Kühlluft gegeben, so dass insgesamt eine größere Ansaugfläche zur Verfügung steht. Die große Ansaugfläche sorgt für eine kleine Strömungsgeschwindigkeit und damit auch eine kleine Schmutzmitnahme. Die Menge an von der Kühlluft mitgenommenem Schmutz sinkt mit dem Quadrat der Strömungsgeschwindigkeit. Die Anzahl mitgenommener Partikel einer hinreichend kleinen, gleichen Größe und Beschaffenheit ist proportional zum Quadrat der Geschwindigkeit der Kühlluft. Dadurch, dass eine untere Eintrittsöffnung vorgesehen ist, kann Schmutz der durch eine der Öffnungen für Kühlluft angesaugt wurde, unter Einwirkung der Schwerkraft durch die untere Eintrittsöffnung wieder aus dem Arbeitsgerät herausfallen. Insbesondere ist das Arbeitsgerät so ausgelegt, dass Schmutz sich vom Luftfilter aufgrund der Schwerkraft, insbesondere in einer Abstellposition des Arbeitsgeräts, lösen kann und durch die untere Eintrittsöffnung aus dem Arbeitsgerät herausfallen kann. Dadurch wird der Luftfilter nicht unnötig zugesetzt.

Die Eintrittsöffnung, die so angeordnet ist, dass Kühlluft in Längsrichtung durch sie strömen kann, besitzt eine Strömungsquerschnittsfläche. Die untere Eintrittsöffnung besitzt eine untere Strömungsquerschnittsfläche. Insbesondere beträgt die Strömungsquerschnittsfläche der unteren Eintrittsöffnung von 100% bis 120% der Strömungsquerschnittsfläche der Eintrittsöffnung.

Zweckmäßig weist das Arbeitsgerät einen Filterdeckel zur Halterung des Luftfilters auf. Es kann aber auch vorgesehen sein, dass das Arbeitsgerät ohne Filterdeckel ausgebildet ist. Insbesondere deckt der Filterdeckel den Luftfilter zumindest teilweise, insbesondere in Seitenansicht in Richtung senkrecht auf die erste Seite der Werkzeugebene vollständig ab. Zweckmäßig ist der Luftfilter zwischen dem Filterdeckel und dem Außengehäuse gehalten, insbesondere geklemmt gehalten.

Insbesondere ist der Luftfilter mit Spiel zwischen dem Filterdeckel und einem Grundkörper der Motorkettensäge oder des Trennschleifers gehalten. Dadurch ist eine einfache Herstellung des Arbeitsgeräts möglich. Der Filterdeckel kann gegen den Grundkörper gepresst werden und am Grundkörper anliegen ohne dass hierfür der Luftfilter bei den Herstellungstoleranzen berücksichtigt werden muss. Dadurch, dass der Filterdeckel gegen den Grundkörper gepresst werden kann, können geringen Anforderung an die Fertigungstoleranzen bezüglich der Relativlage von Grundkörper und Filterdeckel gestellt werden und dennoch der Filterdecke verlässlich dicht am Grundkörper anliegen.

In zweckmäßiger Weiterbildung der Erfindung ist die Eintrittsöffnung des Arbeitsgeräts in dem Filterdeckel ausgebildet. Zweckmäßig ist die untere Eintrittsöffnung in dem Filterdeckel ausgebildet. Dadurch kann die Eintrittsöffnung bzw. die untere Eintrittsöffnung auf einfache Weise hergestellt werden.

Zweckmäßig ist der Filterdeckel und/oder der Luftfilter, insbesondere der außenliegende Luftfilter, durch ein einziges Befestigungselement an dem Außengehäuse befestigbar. Dadurch kann der Filterdeckel dicht, insbesondere luftdicht, an dem Außengehäuse anliegen. Insbesondere handelt es sich bei dem einzigen Befestigungselement um ein zentrales Befestigungselement. Insbesondere ist das Befestigungselement in der Seitenansicht senkrecht auf die Werkzeugebene in etwa in der Mitte des Filterdeckels, insbesondere im Flächenschwerpunkt der der Filteraußenkontur zugeordneten Fläche befestigbar. Dadurch, dass der Filterdeckel durch ein einziges Befestigungselement befestigbar ist, kann der Filterdeckel auf einfache und komfortable Weise montiert und demontiert werden. Der Luftfilter ist schnell austauschbar und auf einfache Weise zugänglich.

Insbesondere weist das Außengehäuse eine Gehäuseöffnung zum Ansaugen von Kühlluft in das Außengehäuse auf. Insbesondere deckt der Luftfilter die Gehäuseöffnung ab. Zweckmäßig ist der Luftfilter in der Gehäuseöffnung angeordnet. Es kann aber auch vorgesehen sein, dass der Luftfilter auf oder an der Gehäuseöffnung angeordnet ist. Der Filterdeckel weist in der Seitenansicht senkrecht auf die Werkzeugebene eine Deckelaußenkontur auf. Die Deckelaußenkontur begrenzt in einer gedachten Projektion auf die Werkzeugebene in der Werkzeugebene eine gedachte Deckelfläche. Die gedachte Projektion erfolgt in Richtung senkrecht zur Werkzeugebene. Bei einer Projektion des Filterdeckels in Richtung senkrecht zur Werkzeugebene auf die Werkzeugebene weist diese Projektion eine Außenkontur auf, die der Deckelaußenkontur entspricht. Die Deckelaußenkontur begrenzt in der Werkzeugebene die gedachte Deckelfläche. Insbesondere ist der Filterdeckel in der Seitenansicht senkrecht auf die Werkzeugebene, insbesondere innerhalb der Deckelaußenkontur, über mindestens 85%, insbesondere über mindestens 90%, insbesondere über mindestens 95% der Deckelfläche frei von Öffnungen für den Eintritt von Kühlluft in das Arbeitsgerät.

Zweckmäßig weist der Filterdeckel Anpressrippen zum Anpressen des Luftfilters gegen das Außengehäuse auf. Die Anpressrippen sind insbesondere im Bereich der Eintrittsöffnung und/oder der unteren Eintrittsöffnung angeordnet. Die Anpressrippen grenzen insbesondere an die Eintrittsöffnung und/oder die unteren Eintrittsöffnung an. Die Anpressrippen sind zweckmäßig in Strömungsrichtung der Kühlluft tiefer, als sie in Richtung quer zur Strömungsrichtung der Kühlluft breit sind. Durch die Anpressrippen ist der Filterdeckel ausreichend auf dem Außengehäuse abgestützt. Dadurch, dass die Anpressrippen in Strömungsrichtung der Kühlluft ausgerichtet sind, stellen die Anpressrippen einen geringen Strömungswiderstand für die Kühlluft dar. Die Anpressrippen blockieren den Eintritt von Kühlluft in das Arbeitsgerät, insbesondere in das Außengehäuse, nur in dem Maß, das mindestens erforderlich ist, um den Luftfilter mittels der Anpressrippen gegen das Außengehäuse zu pressen.

In besonderer Weiterbildung der Erfindung weist das Außengehäuse einen Aufnahmeschacht für einen Akkupack auf. Der Akkupack ist in einer Einschubrichtung durch eine Aufnahmeöffnung des Aufnahmeschachts in den Aufnahmeschacht einschiebbar. Zweckmäßig ist die Seitenfläche frei von der Aufnahmeöffnung eines Aufnahmeschacht für einen Akku. Dadurch kann die Filterfläche besonders groß gestaltet sein. Für eine Aufnahmeöffnung eines Aufnahmeschachts muss an der Seitenfläche kein Platz vorgesehen sein. Dadurch kann die Öffnungsfläche der Gehäuseöffnung, insbesondere die Gehäuseöffnung, insbesondere der Luftfilter, besonders groß gestaltet sein. Insbesondere verläuft die Einschubrichtung parallel zur Werkzeugebene.

Zweckmäßig ist vorgesehen, dass sich eine gedachte Projektion des Luftfilters in Richtung senkrecht zur Werkzeugebene auf die Werkzeugebene und eine gedachte Projektion des Aufnahmeschachts in Richtung senkrecht zur Werkzeugebene auf die Werkzeugebene in der Werkzeugebene überlappen.

Zweckmäßig ist der Luftfilter ein Feinfilter. Insbesondere ist der Luftfilter ein Flachfilter. Insbesondere ist der Luftfilter ein Feinstaubfilter.

Insbesondere umfasst der Luftfilter einen Filterrahmen und ein Luftfilterelement. Das Luftfilterelement ist insbesondere in dem Filterrahmen gehalten. Das Luftfilterelement ist die Einheit, die für sich genommen die Filterung der Luft bewirkt. Der Luftfilter kann auch ausschließlich aus einem Luftfilterelement bestehen. Es kann auch vorgesehen sein, dass der Luftfilter keinen Filterrahmen umfasst. Der Luftfilter wird auch als Luftfilterbauteil bezeichnet.

Der Luftfilter weist eine tatsächliche Fläche auf. Insbesondere ist die tatsächliche Fläche eine, insbesondere im mathematischen Sinn, gekrümmte Fläche. Die tatsächliche Fläche entspricht dem integrierten Flächeninhalt einer Seite der Oberfläche des Luftfilters, insbesondere des Luftfilterelements des Luftfilters. Zweckmäßig ist die tatsächliche Fläche größer als die auf die Werkzeugebene projizierte Filterfläche. Dies kann bei beiden Lösungsvarianten der Fall sein. Insbesondere beträgt die tatsächliche Fläche mindestens 140%, insbesondere mindestens 160%, insbesondere mindestens 200% der auf die Werkzeugebene projizierten Filterfläche. Dadurch kann die Filterwirkung auf kleinem Raum, insbesondere bei kleiner auf die Werkzeugebene projizierten Filterfläche, gut sein. Insbesondere weist der Luftfilter, insbesondere das Luftfilterelement, Falten auf. Insbesondere ist der Luftfilter, insbesondere das Luftfilterelement ein Plissee.

Insbesondere beträgt die tatsächliche Fläche des Luftfilters mindestens 150 cm², insbesondere 225 cm², insbesondere mindestens 275 cm².

Insbesondere beträgt die tatsächliche Fläche des Luftfilters mindestens 8%, insbesondere mindestens 10%, insbesondere mindestens 15%, insbesondere mindestens 25%, insbesondere mindestens 30%, insbesondere mindestens 35%, insbesondere mindestens 38%, der auf die Werkzeugebene projizierten Gehäusefläche.

Insbesondere bildet der Luftfilter einen Teil der Außenseite des Arbeitsgeräts. Vorteilhaft ist die Gehäuseöffnung als Vertiefung in der ersten Seitenfläche des Außengehäuses ausgebildet, so dass zwischen einer Außenseite der ersten Seitenfläche und dem Luftfilter ein Hohlraum ausgebildet ist. Insbesondere ist in der Gehäuseöffnung eine Wanddurchdringungsöffnung ausgebildet. Zweckmäßig durchdringt die Wanddurchdringungsöffnung eine Wand des Außengehäuses vollständig. Insbesondere durchdringt die Wanddurchdringungsöffnung die Wand des Außengehäuses vollständig in einem Bereich der Wand, der durch den Luftfilter abgedeckt ist. Durch die Ausbildung des Hohlraums mit einer Wanddurchdringungsöffnung ist eine Gestaltung der Motorkettensäge oder des Trennschleifers derart möglich, dass gleichzeitig eine gute Filterwirkung aufgrund einer großen Filterfläche und eine gute Kühlwirkung aufgrund einer hohen Strömungsgeschwindigkeit der Kühlluft erreicht wird.

Die Wanddurchdringungsöffnung besitzt eine Durchdringungsfläche. Vorteilhaft ist die Durchdringungsfläche kleiner als die Filterfläche. Dadurch wird die Strömungsgeschwindigkeit der Kühlluft auf dem Weg vom Luftfilter zu der Durchdringungsöffnung erhöht.

Insbesondere ist der Hohlraum trichterförmig. Insbesondere bildet der Luftfilter eine Eingangsöffnung für die Kühlluft in den Hohlraum. Insbesondere bildet die Durchdringungsöffnung eine Ausgangsöffnung für den Austritt der Kühlluft aus dem Hohlraum. Insbesondere bildet die Durchdringungsöffnung eine Eintrittsöffnung für den Eintritt der Kühlluft in das Innere des Außengehäuses. Dadurch ist bauraumsparende Gestaltung der Motorkettensäge oder des Trennschleifers möglich. Zur Verjüngung des Strömungsquerschnitts für die Kühlluft kann die erste Seitenfläche des Außengehäuses und die darin als Vertiefung ausgebildete Gehäuseöffnung genutzt werden. Es sind keine weiteren Bauteile hierfür erforderlich.

Insbesondere beträgt die Durchdringungsfläche höchstens 30%, insbesondere höchstens 20% der Filterfläche. Insbesondere beträgt die Durchdringungsfläche höchstens 800 mm², insbesondere höchstens 600 mm², insbesondere mindestens 400 mm².

Insbesondere können die beiden Lösungen der Aufgabe - die nach Anspruch 1 und die alternative Lösung - miteinander kombiniert werden. Auch die Kombination einzelner hier beschriebener Merkmale miteinander ist möglich.

Ausführungsbeispiele der Erfindung werden im Folgenden anhand der Zeichnung erläutert. Es zeigen:
- Fig. 1: eine perspektivische Darstellung eines handgeführten Arbeitsgeräts ohne Werkzeug, wobei der Filterdeckel nach Art einer Explosionsdarstellung vom Außengehäuse entfernt dargestellt ist,
- Fig. 2: eine Seitenansicht des Arbeitsgeräts aus Fig. 1 mit Werkzeug und Blickrichtung senkrecht auf die Werkzeugebene des Werkzeugs,
- Fig. 3: eine Seitenansicht auf das hintere Ende des Arbeitsgeräts aus Fig. 1 in Richtung seiner Längsrichtung,
- Fig. 4: eine Draufsicht von oben auf das Arbeitsgerät aus Fig. 1,
- Fig. 5: eine Seitenansicht auf die Außenseite des Filterdeckels des Arbeitsgeräts aus Fig. 1,
- Fig. 6: eine Seitenansicht auf die Innenseite des Filterdeckels des Arbeitsgeräts aus Fig. 1,
- Fig. 7: eine Seitenansicht auf die hintere Seite des Filterdeckels aus Fig. 5, die im am handgeführten Arbeitsgerät montierten Zustand dem Werkzeug des Arbeitsgeräts abgewandt ist ,
- Fig. 8: eine Draufsicht von unten auf den Filterdeckel aus Fig. 5, auf den Boden des Arbeitsgeräts, der im montierten Zustand des Filterdeckels, wenn das Arbeitsgerät auf seiner Abstellfläche auf einer Horizontalebene abgestellt ist, zur Horizontalebene hin zeigt,
- Fig. 9: eine schematische Seitenansicht auf eine alternative Ausführung des Arbeitsgeräts aus Fig. 1, bei der der Luftfilter offen an der ersten Seitenfläche liegt ohne durch einen Filterdeckel abgedeckt zu sein, wobei das Arbeitsgerät mit Werkzeug und in Blickrichtung senkrecht auf die erste Seite der Werkzeugebene des Werkzeugs dargestellt ist, auf der auch der Luftfilter angeordnet ist,
- Fig. 10: eine schematische Seitenansicht auf das Arbeitsgeräts nach Fig. 9 mit demontiertem Luftfilter in Blickrichtung senkrecht auf die erste Seite der Werkzeugebene des nicht dargestellten Werkzeugs, auf der auch der Luftfilter anzuordnen ist,
- Fig. 11: eine schematische perspektivische Ansicht von unten auf das Arbeitsgerät aus Fig. 10 mit demontiertem Luftfilter, in der eine Durchdringungsöffnung in einen Gehäuseinnenraum eines Außengehäuses sichtbar ist und
- Fig. 12: ein Detail einer perspektivischen Ansicht von unten auf das Arbeitsgerät aus Fig. 10 mit demontiertem Luftfilter, in der die Durchdringungsöffnung in den Gehäuseinnenraum des Außengehäuses sichtbar ist.

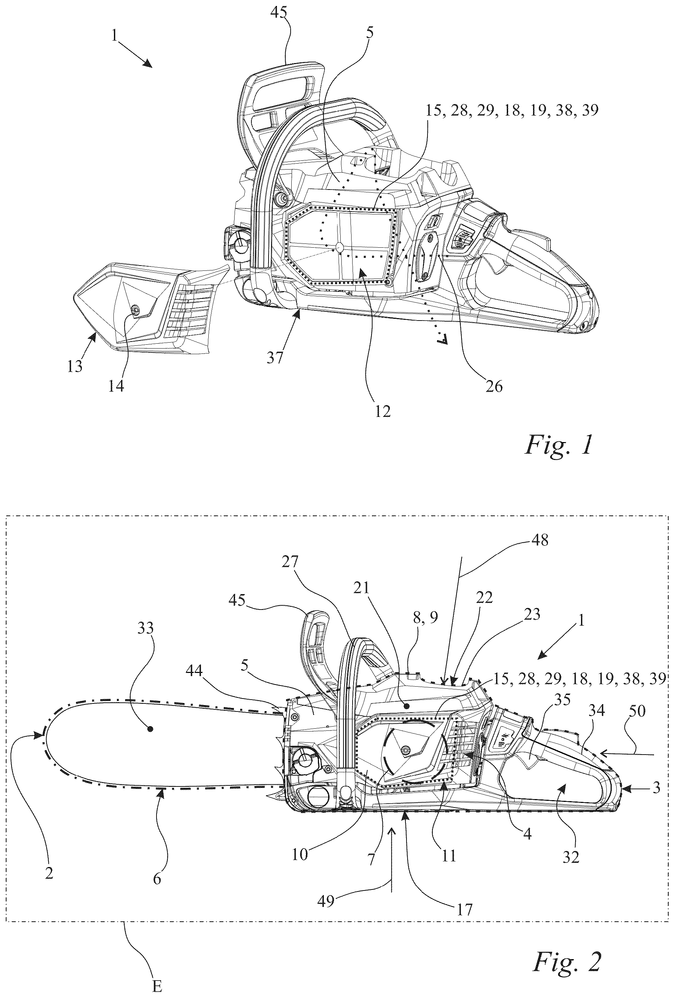

Fig. 1 zeigt ein handgeführtes Arbeitsgerät 1. Das handgeführte Arbeitsgerät 1 umfasst ein in Fig. 2 dargestelltes Werkzeug 6. Das Werkzeug 6 ist in Fig. 1 nicht dargestellt. Das handgeführte Arbeitsgerät 1 ist entweder eine Motorkettensäge oder ein Trennschleifer. Im Ausführungsbeispiel ist das handgeführte Arbeitsgerät 1 eine Motorkettensäge. Im Ausführungsbeispiel ist die Motorkettensäge eine sogenannte Rear-Handle-Kettensäge oder Baumfällsäge. Es kann sich aber auch um eine sogenannte Top-Handle-Kettensäge oder Baumpflegesäge handeln. Das handgeführte Arbeitsgerät 1 ist im bestimmungsgemäßen Einsatz tragbar. Das handgeführte Arbeitsgerät 1 ist im bestimmungsgemäßen Einsatz handgeführt.

Wie in Fig. 2 schematisch dargestellt, umfasst das handgeführte Arbeitsgerät 1 einen Motor 7 zum Antrieb des Werkzeugs 6. Im Ausführungsbeispiel ist der Motor 7 ein Elektromotor. Das Werkzeug 6 ist eine Sägekette. Es kann aber auch vorgesehen sein, dass das Werkzeug 6 ein Sägeblatt oder eine Trennscheibe ist. Im Ausführungsbeispiel läuft das Werkzeug 6 im Betrieb um eine Führungsschiene 33 um.

Das Arbeitsgerät 1 umfasst einen Bediengriff 34. Am Bediengriff 34 ist ein Bedienelement 35 angeordnet. Mittels des Bedienelements 35 kann der Bediener die Leistung des Motors 7 bzw. die Drehzahl des Motors 7 oder des Werkzeugs 6 vorgeben. Der Bediengriff 34 begrenzt eine Grifföffnung 32. Durch die Grifföffnung 32 kann der Benutzer mit den Fingern seiner Hand durchgreifen und so den Bediengriff 34 umschließen. Die Grifföffnung 32 durchdringt das Arbeitsgerät 1, insbesondere das Außengehäuse 5 vollständig. Zusätzlich zum Bediengriff 34 umfasst das Arbeitsgerät 1 einen Bügelgriff 27. Der Bügelgriff 27 dient zum Tragen und Führen des Arbeitsgeräts 1. Der Bügelgriff 27 ist zwischen dem Bediengriff 34 und dem Werkzeug 6 angeordnet.

Eine Längsrichtung 50 erstreckt sich in Richtung von dem Bediengriff 34 hin zu dem Werkzeug 50. Dies gilt auch für den Fall einer Baumpflegesäge. Die Längsrichtung 50 verläuft parallel zu einer Horizontalebne, wenn das Arbeitsgerät 1 auf der Horizontalebene abgestellt ist. Die Längsrichtung 50 entspricht in den Ausführungsbeispielen der Längsrichtung der Führungsschiene 33. Das Arbeitsgerät 1 umfasst in allen Ausführungsbeispielen einen Boden 17. Die Motorkettensäge kann mit dem Boden 17 auf einer Horizontalebene aufliegen. Im Ausführungsbeispiel ist durch den Boden 17 eine Abstellfläche gebildet. Die Längsrichtung 50 verläuft parallel zu dem Boden 17. Der Bügelgriff 27 ist bezüglich der Längsrichtung 50 zwischen dem Bediengriff 34 und dem Werkzeug 6 angeordnet.

Das Arbeitsgerät 1 besitzt ein vorderes Ende 2 und ein hinteres Ende 3. Das vordere Ende 2 ist im Betrieb des Arbeitsgeräts 1 vom Benutzer abgewandt. Das hintere Ende 3 ist im Betrieb dem Benutzer zugewandt. Im Ausführungsbeispiel befindet sich das vordere Ende 2 am vorderen Ende der Führungsschiene 33. Das um die Führungsschiene 33 umlaufende Werkzeug bildet das vordere Ende 2 des Arbeitsgeräts 1. Das hintere Ende 3 ist am hinteren Ende des Bediengriffs 34 angeordnet. Der Bediengriff 34 bildet das hintere Ende 3 des Arbeitsgeräts 1. Die Längsrichtung 50 verläuft in Richtung vom hinteren Ende 3 zu dem vorderen Ende 2. Die Längsrichtung 50 zeigt im Einsatz des Arbeitsgeräts 1 vom Bediener weg. Der Bügelgriff 27 ist bezüglich der Längsrichtung 50 zwischen dem vorderen Ende 2 und dem hinteren Ende 3 angeordnet.

Wie in Fig. 2 dargestellt, umfasst das Arbeitsgerät 1 einen Eintrittsöffnung 4. Die Eintrittsöffnung 4 dient zum Eintritt von Kühlluft in das Arbeitsgerät 1. Die Kühlluft ist zur Kühlung des als Elektromotor ausgebildeten Motors 7, insbesondere zur Kühlung der elektronischen Komponenten des Elektromotors vorgesehen. Das Arbeitsgerät 1 umfasst einen Luftfilter 12 zur Filterung der Kühlluft. Der Luftfilter 12 ist in Fig. 1 dargestellt. In den Ausführungsbeispielen umfasst der Luftfilter 12 einen Filterrahmen und ein Luftfilterelement. Das Luftfilterelement ist insbesondere in dem Filterrahmen gehalten. Das Luftfilterelement ist die Einheit, die für sich genommen die Filterung der Luft bewirkt. In den Ausführungsbeispielen ist das Luftfilterelement des Luftfilters 12 ein Feinfilter. Der Feinfilter weist eine Maschenweite von kleiner als 100 µm auf. In Ausführungsbeispielen ist das Luftfilterelement des Luftfilters 12 ein Flachfilter. Es kann sich bei dem Luftfilterelement des Luftfilters 12 aber auch um jede andere Art von Luftfilterelement handeln. Der Luftfilter 12 kann auch ausschließlich aus einem Luftfilterelement bestehen. Es kann auch vorgesehen sein, dass der Luftfilter keinen Filterrahmen umfasst. Der Luftfilter 12 wird auch als Luftfilterbauteil bezeichnet.

Im Ausführungsbeispiel ist der Luftfilter 12 ein Feinfilter. Im Ausführungsbeispiel ist der Luftfilter 12 ein Flachfilter. Es kann sich bei dem Luftfilter 12 aber auch um jede andere Art von Luftfilter handeln. Das Arbeitsgerät 1 umfasst ein Außengehäuse 5. Der Motor 7 ist in dem Außengehäuse 5 angeordnet. Das Außengehäuse 5 begrenzt das Arbeitsgerät 1 zumindest teilweise nach außen hin.

Wie in Fig. 2 dargestellt, besitzt das Werkzeug 6 eine Werkzeugebene E. Die Werkzeugebene E verläuft parallel zur Längsrichtung 50. Die Längsrichtung 50 verläuft parallel zur Werkzeugebene E. Im Ausführungsbeispiel verläuft die Werkzeugebene E senkrecht zum Boden 17 des Arbeitsgeräts 1. Die Grifföffnung 32 durchdringt das Arbeitsgerät 1, insbesondere das Außengehäuse 5 in Richtung senkrecht zur Werkzeugebene E vollständig. Beim Abstellen des Arbeitsgeräts 1 auf einer Horizontalebene, verläuft die Werkzeugebene E senkrecht zur Horizontalebene. Das Werkzeug 6 läuft in der Werkzeugebene E um. Im Ausführungsbeispiel läuft die Sägekette in der Werkzeugebene E um die Führungsschiene 33 um. Wenn das Arbeitsgerät als Trennschleifer ausgebildet ist, rotiert das Kreissägeblatt in der Werkzeugebene. Die Rotationsachse des Werkzeugs 6 verläuft senkrecht zur Werkzeugebene E.

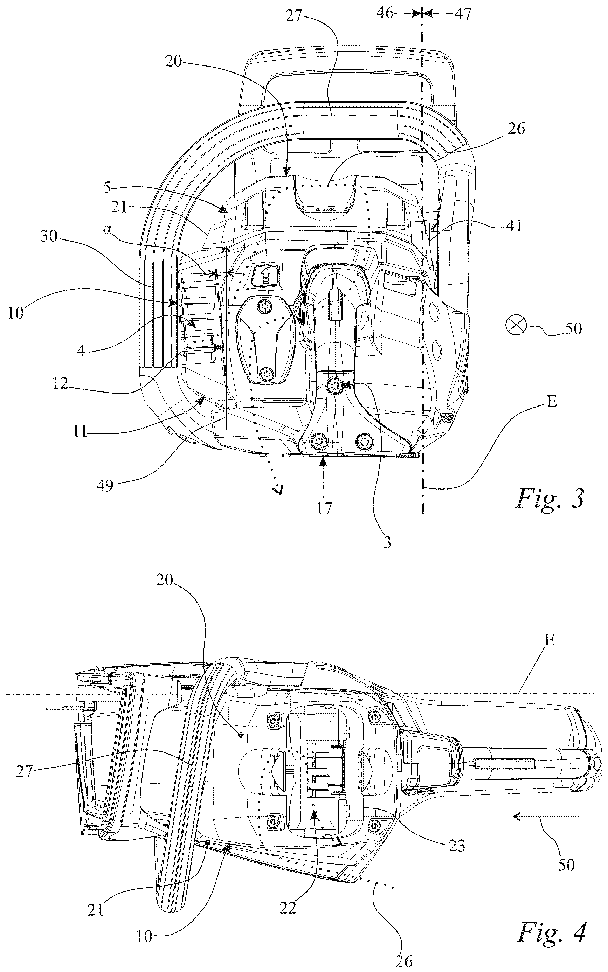

Wie in Fig. 2 ersichtlich, ist die Eintrittsöffnung 4 so angeordnet, dass Kühlluft in Längsrichtung 50 durch die Eintrittsöffnung 4 strömen kann. Die Kühlluft kann also in Richtung vom hinteren Ende 3 des Arbeitsgeräts 1 hin zum vorderen Ende 2 des handgeführten Arbeitsgeräts 1 durch die Eintrittsöffnung 4 in das Arbeitsgerät 1 eintreten. Dass die Kühlluft in Längsrichtung 50 durch die Eintrittsöffnung 4 strömen kann, ist auch in Fig. 3 ersichtlich. In einer Seitenansicht auf das hintere Ende 3 sind die Eintrittsöffnungen 4 für die Kühlluft von außen in das Innere des handgeführten Arbeitsgeräts 1 sichtbar.

Die Werkzeugebene E besitzt eine in Fig. 3 dargestellte erste Seite 46. Die Werkzeugebene E besitzt eine zweite Seite 47. Die Werkzeugebene E trennt die erste Seite 46 von der zweiten Seite 47. Der Luftfilter 12 ist vollständig auf der ersten Seite 46 der Werkzeugebene E angeordnet.

Wie in Fig. 2 dargestellt, besitzt das Außengehäuse 5 in einer Seitenansicht senkrecht auf die Werkzeugebene E, insbesondere auf die erste Seite 46 der Werkzeugebene E eine Gehäuseaußenkontur 8. Die Gehäuseaußenkontur 8 begrenzt bei Projektion der Gehäuseaußenkontur 8 in Richtung senkrecht auf die Werkzeugebene E auf die Werkzeugebene E in der Werkzeugebene E eine gedachte Gehäusefläche 9. Die Gehäuseaußenkontur 8 schließt sämtliche innerhalb der Gehäuseaußenkontur 8 liegenden Öffnungen des Arbeitsgeräts 1 ein. Insbesondere umschließt die Gehäuseaußenkontur 8 die Grifföffnung 32. Die Gehäusefläche 9 besitzt keinerlei von der Gehäusefläche 9 eingeschlossenen Bereiche, die nicht zur Gehäusefläche 9 zählen. Die Gehäusefläche 9 besitzt keine innenliegende Kontur. Die Gehäusefläche 9 wird durch eine einzige, geschlossen um die Gehäusefläche 9 umlaufende Begrenzungslinie, nämlich die Gehäuseaußenkontur 8, begrenzt.

Das Arbeitsgerät 1 umfasst einen Bremshebel 45. Der Bremshebel 45 ist schwenkbar am Außengehäuse 5 gelagert. Der Bremshebel 45 dient zum Abbremsen des Werkzeugs 6. Der Bremshebel 46 liegt teilweise außerhalb der Gehäuseaußenkontur 8. Der Bremshebel 46 steht über die Gehäuseaußenkontur 8 hervor.

Das Arbeitsgerät 1 umfasst einen in Fig. 2 dargestellten Krallenanschlag 44. Der Krallenanschlag 44 ist am Außengehäuse 5 festgelegt. Der Krallenanschlag 44 dient als Anschlag des Arbeitsgeräts 1 beim Eingriff des Werkzeugs 6 in ein Werkstück. Der Krallenanschlag 44 liegt zumindest teilweise außerhalb der Gehäuseaußenkontur 8. Der Krallenanschlag 44 steht über die Gehäuseaußenkontur 8 hervor.

Das Arbeitsgerät 1 ist in der Seitenansicht senkrecht auf die erste Seite 46 der Werkzeugebene E innerhalb der Gehäuseaußenkontur 8 über mindestens 95%, insbesondere über mindestens 97%, insbesondere über mindestens 98,5% der Gehäusefläche 9 frei von Öffnungen für den Eintritt von Kühlluft in das Arbeitsgerät 1. Die Seitenansicht senkrecht auf die erste Seite 46 der Werkzeugebene E ist die Seitenansicht des Arbeitsgeräts 1, in der man in Richtung senkrecht auf die Werkzeugebene E blickt, und zwar von der ersten Seite 46 der Werkzeugebene E aus. Man befindet sich also auf der ersten Seite 46 der Werkzeugebene E und blickt Richtung Werkzeugebene E.

Eine Projektion sämtlicher, in Seitenansicht senkrecht auf die erste Seite 46 der Werkzeugebene E sichtbarer Öffnungen für den Eintritt von Kühlluft in Richtung senkrecht auf die Werkzeugebene E auf die Werkzeugebene E bedeckt in der Gehäusefläche 9 einen Flächenanteil von weniger als 5%, insbesondere von weniger als 3%, insbesondere von weniger als 1,5% der Gehäusefläche 9. Der Bereich der Gehäusefläche 9, der frei von Projektionen der Öffnungen für den Eintritt von Kühlluft in das Arbeitsgerät 1 ist, beträgt mindestens 95%, insbesondere mindestens 97%, im Ausführungsbeispiel mindestens 98,5% der Gehäusefläche 9.

Mit Öffnung ist der Teil einer Durchdringungsöffnung für den Eintritt von Kühlluft in das Arbeitsgerät 1 bezeichnet, der in Seitenansicht in Richtung senkrecht auf die erste Seite 46 der Werkzeugebene E sichtbar ist. Die Durchdringungsöffnung kann größer als die Öffnung sein. In Seitenansicht in Richtung senkrecht auf die erste Seite 46 der Werkzeugebene E kann die Durchdringungsöffnung von Bauteilen des Arbeitsgeräts 1 überdeckt sein.

Die Eintrittsöffnung 4 ist eine Durchdringungsöffnung für den Eintritt von Kühlluft in das Arbeitsgerät 1. Die Eintrittsöffnung 4 ist an der Außenseite des Arbeitsgeräts 1 angeordnet. Die Eintrittsöffnung 4 stellt die erste Einlasspforte für den Eintritt von Kühlluft von außen in das Arbeitsgerät 1 dar. Die Eintrittsöffnung 4 ist eine Öffnung für den Eintritt von Kühlluft in das Arbeitsgerät 1 im oben beschriebenen Sinn. Im Ausführungsbeispiel ist die projizierte Fläche der Öffnung der Eintrittsöffnung 4 und der Durchdringungsöffnung der Eintrittsöffnung 4 identisch. Es kann aber auch vorkommen, dass die projizierter Fläche der Durchdringungsöffnung größer ist als die projizierte Fläche der Öffnung.

Anstatt in der Werkzeugebene E kann die Gehäuseaußenkontur 8 die Gehäusefläche 9 auch in einer gedachten, parallel zur Werkzeugebene E verlaufenden Ebene begrenzen.

Wie in Fig. 2 dargestellt, weist das Arbeitsgerät 1 eine Außenwand 10 auf. Die Eintrittsöffnung 4 durchdringt im Ausführungsbeipiel die Außenwand 10 vollständig. Eine Durchdringungsöffnung durchdringt die Außenwand 10 vollständig. Eine Öffnung durchdringt die Außenwand 10 vollständig. Die Außenwand 10 stellt die unmittelbare Begrenzung des Arbeitsgeräts 1 gegenüber dem außenliegenden Bereich dar. Die Außenwand 10 bildet zumindest teilweise eine Wand des Außengehäuses 5. Es kann auch vorgesehen sein, dass die Außenwand 10 zum größten Teil geschlossen ist und die Kühlluft über kleinere Öffnungen in das Innere des Gehäuses gelangen bzw. gesaugt werden kann.

Wie insbesondere in den Figuren 2 und 5 bis 8 dargestellt, weist das Arbeitsgerät 1 eine untere Eintrittsöffnung 11 auf. Die untere Eintrittsöffnung 11 ist für den Eintritt von Kühlluft in das Arbeitsgerät 1 vorgesehen. Die untere Eintrittsöffnung 11 ist zusätzlich zur Eintrittsöffnung 4 vorgesehen. Die untere Eintrittsöffnung 11 ist so angeordnet, dass Kühlluft in einer Aufwärtsrichtung 49 durch die untere Eintrittsöffnung 11 strömen kann. Die Aufwärtsrichtung 49 erstreckt sich in Richtung quer zur Längsrichtung 50.

Die Aufwärtsrichtung 49 erstreckt sich in Richtung parallel zur Werkzeugebene E. Im Ausführungsbeispiel erstreckt sich die Aufwärtsrichtung 49 in Richtung senkrecht zur Längsrichtung 50. Wenn das Arbeitsgerät 1 auf einer Horizontalebene in einer dafür vorgesehenen Abstellposition abgestellt ist, erstreckt sich die Aufwärtsrichtung 49 im Ausführungsbeispiel senkrecht zur Horizontalfläche. Im Ausführungsbeispiel erstreckt sich die Aufwärtsrichtung 49 senkrecht zum Boden 17. Im Ausführungsbeispiel ist die untere Eintrittsöffnung 11 getrennt von der Eintrittsöffnung 4 ausgebildet. Es kann aber auch vorgesehen sein, dass eine einzige Eintrittsöffnung vorgesehen ist, durch die sowohl ein Eintritt von Kühlluft in Längsrichtung 50 als auch ein Eintritt von Kühlluft in Aufwärtsrichtung 49 in das Arbeitsgerät 1 möglich ist. In diesem Fall ist die einzige Eintrittsöffnung nur gedanklich in eine Eintrittsöffnung 4 und eine untere Eintrittsöffnung 11 unterteilt.

Im Ausführungsbeispiel umfasst das Arbeitsgerät 1 einen Filterdeckel 13. Der Filterdeckel 13 ist getrennt von einem Grundkörper 37 des Arbeitsgeräts 1 ausgebildet. Der Filterdeckel 13 ist auf dem Grundkörper 37 befestigt. Das Außengehäuse 5 ist das Gehäuse des Grundkörpers 37. Der Luftfilter 12 ist im Ausführungsbeispiel zwischen dem Grundkörper 37 und dem Filterdeckel 13 angeordnet. Der Luftfilter 12 ist im Ausführungsbeispiel zwischen dem Außengehäuse 5 und dem Filterdeckel 13 angeordnet.

Im Ausführungsbeispiel ist die Eintrittsöffnung 4 in dem Filterdeckel 13 ausgebildet. Es kann aber auch vorgesehen sein, dass die Eintrittsöffnung 4 im Außengehäuse 5 des Arbeitsgeräts 1 ausgebildet ist. Im Ausführungsbeispiel ist die untere Eintrittsöffnung 11 im Filterdeckel 13 ausgebildet. Es kann aber auch vorgesehen sein, dass die untere Eintrittsöffnung 11 in dem Außengehäuse 5 des handgeführten Arbeitsgeräts 1 ausgebildet ist.

Der Filterdeckel 13 dient zur Halterung des Luftfilters 12. Wie beispielsweise in Fig. 1 dargestellt, ist der Filterdeckel 13 durch ein einziges Befestigungselement 14 an dem Außengehäuse 5 des Arbeitsgeräts 1 befestigbar. Der Filterdeckel 13 ist insbesondere durch ein einziges, zentrales Befestigungselement 14 an dem Außengehäuse 5 befestigbar. Wie in Fig. 2 dargestellt, ist das Befestigungselement 14 in Seitenansicht auf das Arbeitsgerät 1 in Richtung senkrecht zur Werkzeugebene E in etwa in der Mitte des Filterdeckels 13 angeordnet. Das Befestigungselement 14 ist in dieser Seitenansicht in etwa im Bereich des Flächenschwerpunkts des Filterdeckels 13 angeordnet. Es kann auch vorgesehen sein, dass das Befestigungselement 14 genau im Flächenschwerpunkt des Filterdeckels 13 angeordnet ist. Im Ausführungsbeispiel ist das Befestigungselement 14 eine Schraube. Das Befestigungselement 14 kann durch den Filterdeckel 13 hindurch in den Grundkörper 37 geschraubt werden. Die Schraubrichtung verläuft in Richtung quer, insbesondere in Richtung senkrecht zur Werkzeugebene E.

Der Luftfilter 12 ist zwischen dem Filterdeckel 13 und dem Außengehäuse 5 angeordnet. Der Luftfilter 12 ist zwischen dem Filterdeckel 13 und dem Außengehäuse 5 eingeklemmt. Der Luftfilter 12 ist mit Spiel zwischen dem Filterdeckel 13 und dem Grundkörper 37 des Arbeitsgeräts 1 gehalten. Das Befestigungselement 14 befestigt den Filterdeckel 13 derart am Grundkörper 37, das zwischen dem Filterdeckel 13 und dem Grundkörper 37 ein Halteraum gebildet ist. Der Luftfilter 12 ist in dem Halteraum gehalten. Das Spiel weist der Luftfilter 12 in Richtung quer zur Längsrichtung 50 auf. Das Spiel weist der Luftfilter 12 in Richtung quer, insbesondere in Richtung senkrecht zur Werkzeugebene E auf.

Zwischen dem Filterdeckel 13 und dem Außengehäuse 5 ist ein Raum ausgebildet, der bereits zum Innenraum des Arbeitsgeräts 1 zählt. Durch die Eintrittsöffnung 4 und/oder die untere Eintrittsöffnung 11 kann Kühlluft in das Arbeitsgerät 1, insbesondere in den Raum zwischen Filterdeckel 13 und Außengehäuse 5 eintreten. Der Filterdeckel 13 begrenzt das Arbeitsgerät 1 nach außen hin. Der Filterdeckel 13 dient zur Abdeckung des Luftfilters 12. Der Filterdeckel 13 besitzt eine Decke, die eine äußere Seitenfläche des Arbeitsgeräts 1 bildet. Die Decke begrenzt den Filterdeckel 13 in Richtung quer, insbesondere senkrecht zur Werkzeugebene E. Die Decke ist frei von Öffnungen für den Eintritt von Kühlluft in das Arbeitsgerät 1. Der Filterdeckel 13 besitzt Seitenwände. Die Seitenwände und die Decke begrenzen den Raum zwischen dem Filterdeckel 13 und dem Außengehäuse. Die Eintrittsöffnung 4 ist in einer Seitenwand angeordnet. Die untere Eintrittsöffnung 11 ist in einer Seitenwand angeordnet. Die Decke des Filterdeckels 13 stützt sich über die Seitenwände an dem Außengehäuse 5 ab.

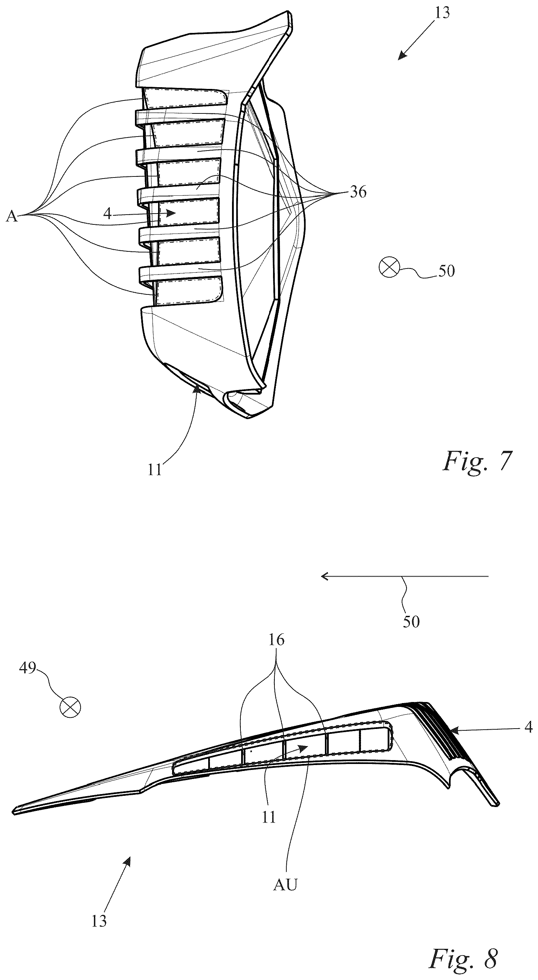

Wie in Fig. 7 dargestellt, besitzt die Eintrittsöffnung 4 eine Strömungsquerschnittsfläche A. Die Strömungsquerschnittsfläche A setzt sich aus mehreren Teilflächen zusammen. Zwischen den mehreren Teilflächen sind Stege 36 des Filterdeckels 13 angeordnet.

Wie in Fig. 8 dargestellt, ist die untere Eintrittsöffnung 11 im Gegensatz zur Eintrittsöffnung 4 an einer bezüglich der Aufwärtsrichtung 49 unten liegenden Seite des Arbeitsgeräts 1 bzw. des Filterdeckels 13 angeordnet. Die Eintrittsöffnungen 4 sind bezüglich der Längsrichtung 50 an einer nach hinten zeigenden Seite des Arbeitsgeräts 1, bzw. des Filterdeckels 13 angeordnet. Die untere Seite des Filterdeckels 13 begrenzt den Filterdeckel in Richtung entgegen der Aufwärtsrichtung 49. Die hintere Seite des Filterdeckels 13 begrenzt den Filterdeckel 13 in Richtung entgegen der Längsrichtung 50. Die Eintrittsöffnung 4 ist in der hinteren Seite des Filterdeckels 13 angeordnet. Die untere Eintrittsöffnung 11 ist in der unteren Seite des Filterdeckels 13 angeordnet.

Wie in Fig. 8 dargestellt, besitzt die untere Eintrittsöffnung 11 eine untere Strömungsquerschnittsfläche AU. Im Ausführungsbeispiel ist die untere Strömungsquerschnittsfläche AU zusammenhängend ausgebildet. Es kann aber auch vorgesehen sein, dass sich die untere Strömungsquerschnittsfläche AU aus mehreren Teilströmungsquerschnittsflächen zusammensetzt. Im Ausführungsbeispiel beträgt die untere Strömungsquerschnittsfläche AU von 100% bis 120% der Strömungsquerschnittsfläche A. Die Strömungsquerschnittsflächen A und AU sind quer zu den Öffnungsflächen der Eintrittsöffnung 4 und der unteren Eintrittsöffnung 11 gemessen.

Wie in Fig. 1 dargestellt, weist das Außengehäuse 5 eine Gehäuseöffnung 15 auf. Die Gehäuseöffnung 15 durchdringt die Außenwand 10 des Außengehäuses 5 vollständig. Die Gehäuseöffnung 15 dient zum Ansaugen von Kühlluft in das Außengehäuse 5. Der Luftfilter 12 ist in der Gehäuseöffnung 15 angeordnet. Der Luftfilter 12 ist im Ausführungsbeispiel auf der Gehäuseöffnung 15 angeordnet. Der Filterdeckel 13 bedeckt die Gehäuseöffnung 15 zumindest teilweise. Es kann auch vorgesehen sein, dass anstatt der die Außenwand 10 vollständig durchdringenden Gehäuseöffnung 15 eine Vertiefung in dem Außengehäuse 5, insbesondere in der Außenwand 10 vorgesehen ist. Der insbesondere umlaufende Rand dieser Vertiefung bildet dann den Ort, an dem der Luftfilter 12 anliegt. In der Vertiefung ist dann eine kleinere Gehäuseöffnung vorgesehen, durch die die Kühlluft in das Innere des Außengehäuses 5 eintritt.

Der Filterdeckel 13 weist in der Seitenansicht senkrecht auf die erste Seite 46 der Werkzeugebene E eine Deckelaußenkontur 18 auf, wie beispielsweise in Fig. 2 dargestellt. Die Deckelaußenkontur 18 schließt die Gehäuseöffnung 15 in einer gedachten Seitenansicht senkrecht auf die Werkzeugebene E vollständig ein. Die Deckelaußenkontur 18 begrenzt bei Projektion der Deckelaußenkontur 18 in Richtung senkrecht zur Werkzeugebene E auf die Werkzeugebene E in der Werkzeugebene E eine gedachte Deckelfläche 19. Der Filterdeckel 13 ist in der Seitenansicht senkrecht auf die erste Seite 46 der Werkzeugebene E innerhalb der Deckelaußenkontur 18 über mindestens 85%, insbesondere über mindestens 90%, im Ausführungsbeispiel über mindestens 95% der Deckelfläche 19 frei von Öffnungen für den Eintritt von Kühlluft in das Arbeitsgerät 1. Eine gedachte Projektion des Filterdeckels 13 in Richtung senkrecht zur Werkzeugebene E auf die Werkzeugebene E ist innerhalb der in selber Weise auf die Werkzeugebene E projizierten Deckelaußenkontur über mindestens 85%, insbesondere über mindestens 80%, im Ausführungsbeispiel über mindestens 95% der Deckelfläche 19 frei von Öffnungen für den Eintritt von Kühlluft in das Arbeitsgerät 1. Der Begriff Öffnung ist auch im Zusammenhang mit dem Filterdeckel 13 wie oben definiert zu verstehen. Hierbei geht es um den Anteil einer Durchdringungsöffnung, der in Ansicht senkrecht auf die erste Seite 46 der Werkzeugebene E sichtbar ist.

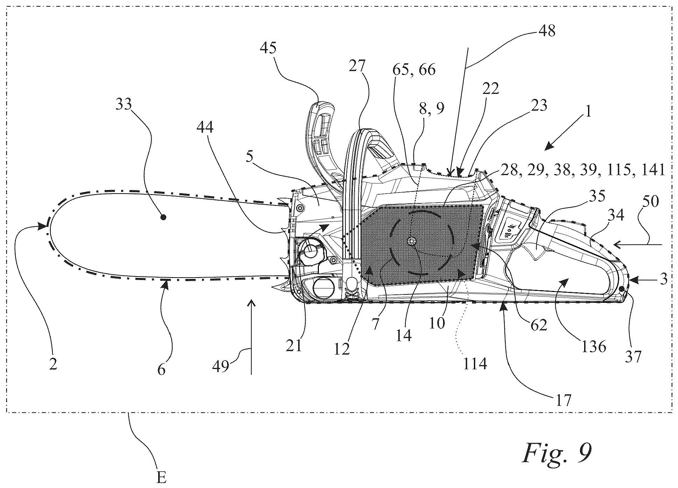

Der Luftfilter 12 besitzt in einer gedachten Projektion in Richtung senkrecht zur Werkzeugebene E auf die Werkzeugebene E eine Filteraußenkontur 38, wie in Fig. 2 oder in Fig. 9 dargestellt. Die Filteraußenkontur 38 begrenzt in der Werkzeugebene E eine gedachte Filterfläche 39. Die Filterfläche 39 beträgt mindestens 60 cm², insbesondere mindestens 70 cm², insbesondere mindestens 80 cm², insbesondere mindestens 85 cm², insbesondere mindestens 100 cm², insbesondere mindestens 125 cm². Im Ausführungsbeispiel beträgt die Filterfläche 39 höchstens 100 cm², insbesondere höchstens 90 cm².

Zwar sind die Deckelfläche 19 und die Filterfläche 39 in Fig. 2 schematisch mit derselben gestrichelten Linie eingezeichnet. Tatsächlich ist die Deckelfläche 19 aber größer als die Filterfläche 39. Die Deckelfläche 19 beträgt mindestens 101%, insbesondere mindestens 110%, im Ausführungsbeispiel mindestens 120% der Filterfläche 39. Die Deckelfläche 19 beträgt höchstens 160%, insbesondere höchstens 150%, im Ausführungsbeispiel höchstens 140% der Filterfläche 39.

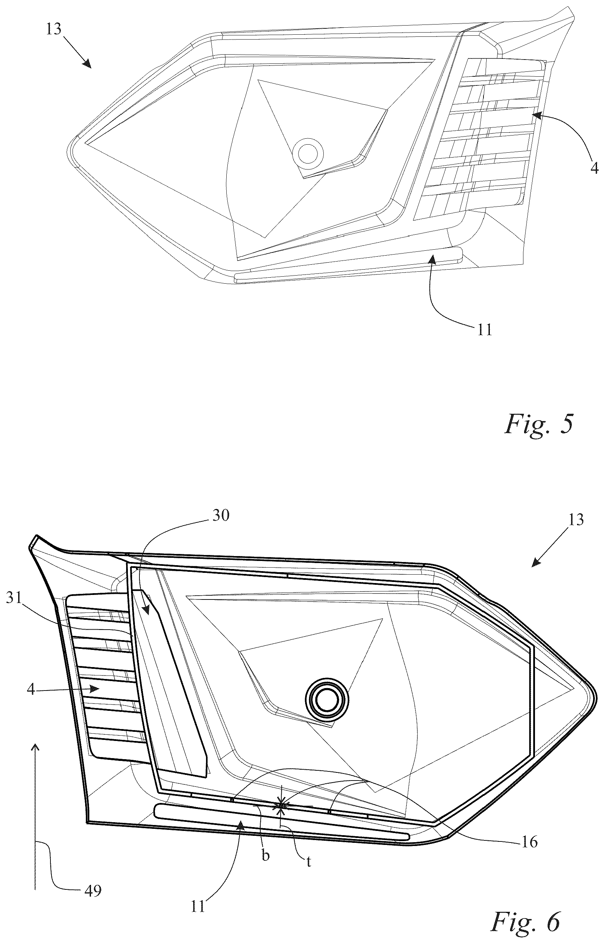

Wie in Fig. 6 dargestellt, weist der Filterdeckel 13 Anpressrippen 16 zum Anpressen des Luftfilters 12 gegen das Außengehäuse 5 auf. Die Anpressrippen 16 erstrecken sich ausgehend von der Decke des Filterdeckels 13 in Richtung auf den Grundkörper 37. Die Anspressrippen 16 pressen den Luftfilter 12 gegen den Grundkörper 37. Die Anspressrippen 16 verlaufen in Richtung quer zur Werkzeugebene E. Die Anpressrippen 16 durchstoßen den Raum zwischen dem Filterdeckel 13 und dem Grundkörper 37. Die Anpressrippen 16 sind im Ausführungsbeispiel im Bereich der unteren Eintrittsöffnung 11 angeordnet. Die Anpressrippen 16 können aber auch im Bereich der Eintrittsöffnung 4 angeordnet sein. Die Anpressrippen 16 sind im Bereich des Rands des Luftfilters 12 angeordnet.

Die Anpressrippen 16 sind in Strömungsrichtung der Kühlluft tiefer als sie in Richtung quer zur Strömungsrichtung breit sind. Die im Ausführungsbeispiel im Bereich der unteren Eintrittsöffnung 4 angeordneten Anpressrippen 16 besitzen eine in Längsrichtung 50 gemessene Breite b und eine in Aufwärtsrichtung 49 gemessene Tiefe t (Fig. 6). Die Tiefe t ist größer als die Breite b. Die Tiefe t beträgt mindestens 150% der Breite b. Zwischen den Anpressrippen 16 kann Kühlluft, die durch die untere Eintrittsöffnung 11 eingetreten ist, zum Luftfilter 12 vordringen und durch die Gehäuseöffnung 15 in das Außengehäuse 5 vordringen. In Ausführungsbeispiel ist im Bereich der Eintrittsöffnung 4 eine geschlossene Anpressleiste 31 angeordnet. Die Anpressleiste 31 presst den Luftfilter 12 gegen das Außengehäuse 5. Oberhalb der Anpressleiste 31 ist eine Luftdurchgangsöffnung 30 im Filterdeckel 12 vorgesehen. Kühlluft kann durch die Eintrittsöffnung 4 in den Filterdeckel 12 eindringen und durch die Luftdurchgangsöffnung zu dem Luftfilter 12 und durch die Gehäuseöffnung 15 in das Außengehäuse 5 weitergeleitet werden.

Wie in Fig. 3 dargestellt, kann das Arbeitsgerät 1 in einer Abstellposition auf einer Horizontalebene abgestellt werden. Der Boden 17 des Außengehäuses 5 ist in der Abstellposition der Horizontalebene zugewandt. Das Außengehäuse 5 weist eine dem Boden 17 gegenüberliegende Gehäusedecke 20 auf. Die Gehäusedecke 20 begrenzt das Außengehäuse 5 des Arbeitsgeräts 1 insbesondere in Aufwärtsrichtung 49. Der Boden 17 begrenzt das Außengehäuse 5 des Arbeitsgeräts 1 insbesondere in Richtung entgegen der Aufwärtsrichtung 49. Das Außengehäuse 5 weist eine erste Seitenfläche 21 auf. Die erste Seitenfläche 21 verbindet die Gehäusedecke 20 mit der Abstellfläche 17. Das Außengehäuse 5 des Arbeitsgeräts 1 weist eine zweite Seitenfläche 41 auf. Die zweite Seitenfläche 41 verbindet die Gehäusedecke 20 mit der Abstellfläche 17. Die erste Seitenfläche 21 liegt der zweiten Seitenfläche 41 gegenüber. Die erste Seitenfläche 21 begrenzt das Außengehäuse 5 in Richtung senkrecht zur Werkzeugebene E auf der ersten Seite 46 der Werkzeugebene E. Die zweite Seitenfläche 41 begrenzt das Außengehäuse 5 des Arbeitsgeräts 1 auf der zweiten Seite 47 der Werkzeugebene E. Die erste Seitenfläche 21 erstreckt sich in Längsrichtung 50. Die erste Seitenfläche 21 erstreckt sich zwischen der Gehäusedecke 20 und dem Boden 17. Der Luftfilter 12 ist an der ersten Seitenfläche 21 des Außengehäuses 5 angeordnet. Die Gehäuseöffnung 15 ist in oder an der ersten Seitenfläche 21 angeordnet. Die Gehäuseöffnung 15 durchdringt im Ausführungsbeispiel die erste Seitenfläche 21 vollständig. Es kann aber auch vorgesehen sein, dass die Gehäuseöffnung 15 lediglich eine Vertiefung im Außengehäuse 5 ist. In oder an der Gehäuseöffnung 15 ist der Luftfilter 12 angeordnet. Die in Fig. 2 dargestellte gedachte Filterfläche 39 beträgt mindestens 5%, insbesondere mindestens 10%, insbesondere mindestens 15% im Ausführungsbeispiel weniger als 30%, insbesondere weniger als 20%, insbesondere weniger als 15% der Gehäusefläche 9.

Der Luftfilter 12 liegt am Rand der Gehäuseöffnung 15 an. Die Gehäuseöffnung ist durch den Bereich definiert, in dem der Luftfilter 12 nicht an der Gehäuseaußenwand 10 anliegt. In diesem Bereich setzt der Luftfilter 12 die Gehäuseaußenwand 10 gewissermaßen fort. Wie in Fig. 2 dargestellt, besitzt die Gehäuseöffnung 15 in einer gedachten Projektion in Richtung senkrecht zur Werkzeugebene E auf die Werkzeugebene E eine Öffnungsaußenkontur 28. Die Öffnungsaußenkontur 28 begrenzt eine gedachte Öffnungsfläche 29. Die Öffnungsfläche 29 erstreckt sich in der Werkzeugebene E. In Fig. 2 sind die Öffnungsfläche 29 und die Deckelfläche 19 mit derselben gestrichelten Linie schematisch eingezeichnet. Tatsächlich ist die Deckelfläche 19 größer als die Öffnungsfläche 29. Die Öffnungsfläche 29 beträgt mindestens 5%, insbesondere mindestens 10%, im Ausführungsbeispiel mindestens 11% der Gehäusefläche 9.

Die Öffnungsfläche 29, insbesondere die Filterfläche 39 beträgt mindestens 60 cm², insbesondere mindestens 70 cm², insbesondere mindestens 80 cm², insbesondere mindestens 85 cm², insbesondere mindestens 100 cm², insbesondere mindestens 125 cm², im Ausführungsbeispiel höchstens 100 cm², insbesondere höchstens 90 cm². Die Flächen sind in Projektion in die Werkzeugebene E gemessen. Diese Flächen sind insbesondere in Seitenansicht senkrecht auf die Werkzeugebene E gemessen.

Der Luftfilter 12 weist eine tatsächliche Fläche auf. Insbesondere ist die tatsächliche Fläche eine, insbesondere im mathematischen Sinn, gekrümmte Fläche. Die tatsächliche Fläche entspricht dem integrierten Flächeninhalt einer Seite der Oberfläche des Luftfilters 12, insbesondere des Luftfilterelements des Luftfilters 12. Zweckmäßig ist die tatsächliche Fläche größer als die auf die Werkzeugebene E projizierte Filterfläche 39. Insbesondere beträgt die tatsächliche Fläche mindestens 140%, insbesondere mindestens 160%, insbesondere mindestens 200% der auf die Werkzeugebene projizierten Filterfläche 39. Dadurch kann die Filterwirkung auf kleinem Raum, insbesondere bei kleiner auf die Werkzeugebene projizierten Filterfläche 39, gut sein. Insbesondere weist der Luftfilter 12, insbesondere das Luftfilterelement, Falten auf. Insbesondere ist der Luftfilter 12, insbesondere das Luftfilterelement ein Plissee.

Insbesondere beträgt die tatsächliche Fläche des Luftfilters mindestens 150 cm², insbesondere 225 cm², insbesondere mindestens 275 cm².

Die tatsächliche Fläche des Luftfilters 12 beträgt insbesondere mindestens 8%, insbesondere mindestens 10%, insbesondere mindestens 15%, insbesondere mindestens 25%, insbesondere mindestens 30%, insbesondere mindestens 35%, insbesondere mindestens 38% der auf die Werkzeugebene E projizierten Gehäusefläche 9.

Die tatsächliche Fläche des Luftfilters 12 kann für alle Ausführungsbeispiele wie vorstehend beschrieben gestaltet sein.

Wie in Fig. 3 schematisch dargestellt, ist der Luftfilter 12 in Aufwärtsrichtung 49 zu der ersten Seitenfläche 21 des Arbeitsgeräts 1 hin geneigt, so dass sich aufgrund der Schwerkraft Schmutz aus dem Luftfilter 12 lösen und herunterfallen kann. Der Luftfilter 12 ist in Aufwärtsrichtung 49 von der Werkzeugebene E weg geneigt. Das Arbeitsgerät 1 ist so ausgelegt, dass aufgrund der Schwerkraft vom Luftfilter 12 gelöster und herabfallender Schmutz durch die untere Eintrittsöffnung 11 aus dem Arbeitsgerät 1 herausfallen kann. Die untere Eintrittsöffnung 11 dient als Schmutzaustritt. Im Ausführungsbeispiel ist der Luftfilter 12 in einem Winkel α von mindestens 5° gegen die Aufwärtsrichtung 49 geneigt. Im Ausführungsbeispiel erstreckt sich der Luftfilter 12 im Wesentlichen in einer Ebene.

Wie in Fig. 3 ersichtlich, ist die Eintrittsöffnung 4 in Ansicht auf das hintere Ende 3 des Arbeitsgeräts 1 in Längsrichtung 50 sichtbar, insbesondere vollständig sichtbar. Im Ausführungsbeispiel ist die Eintrittsöffnung 4 in Ansicht auf das hintere Ende 3 des Arbeitsgeräts 1 in Längsrichtung 50 unverdeckt, insbesondere vollständig unverdeckt.

Im Ausführungsbeispiel ist zur Energieversorgung des als Elektromotor ausgebildeten Motors 7 ein Akkupack vorgesehen. Bei dem handgeführten Arbeitsgerät 1 handelt es sich um ein akkubetriebenes Arbeitsgerät. Wie beispielsweise in den Figuren 2 und 4 dargestellt, weist das Außengehäuse 5 einen Aufnahmeschacht 22 für den Akkupack auf. Der Aufnahmeschacht 22 besitzt eine Aufnahmeöffnung 23. Durch die Aufnahmeöffnung 23 ist der Akkupack in den Aufnahmeschacht 22 einschiebbar. Der Akkupack ist in einer Einschubrichtung 48 in dem Aufnahmeschacht 22 einschiebbar. Wie aus den Figuren 2 bis 4 ersichtlich, ist die erste Seitenfläche 21 frei von der Aufnahmeöffnung 23 des Aufnahmeschachts 22 für den Akkupack. Die Aufnahmeöffnung 23 des Aufnahmeschachts 22 für den Akkupack erstreckt sich ausschließlich in der Gehäusedecke 20 des Außengehäuses 5. Die Einschubrichtung 48 verläuft parallel zur Werkzeugebene E. Die Aufnahmeöffnung 23 läuft geschlossen um die Einschubrichtung 48 um. Beim Einschieben des Akkupacks in den Aufnahmeschacht 22 wird der Akkupack im Wesentlichen entgegen der Aufwärtsrichtung 49 nach unten durch die Aufnahmeöffnung 23 in den Aufnahmeschacht 22 eingeführt.

Eine gedachte Projektion des Luftfilters 12 in Richtung senkrecht zur Werkzeugebene E auf die Werkzeugebene E und eine gedachte Projektion des Aufnahmeschachts 22 in Richtung senkrecht zur Werkzeugebene E auf die Werkzeugebene E überlappen sich in der Werkzeugebene E. Bezüglich einer Richtung quer, insbesondere senkrecht zur Werkzeugebene E liegen der Aufnahmeschacht 22 und der Luftfilter 12 hintereinander, insbesondere in einem Abstand zueinander.

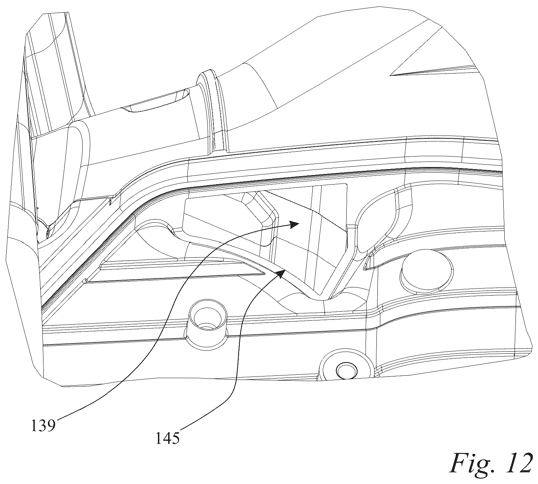

Die Kühlluft wird von einem in den Figuren nicht dargestellten Gebläse des Arbeitsgeräts 1 in das Arbeitsgerät 1 angesaugt und entlang eines Strömungspfads 26 geführt. Der Strömungspfad 26 ist in den Figuren 1, 3 und 4 schematisch gestrichelt eingezeichnet. Die Kühlluft tritt durch die Eintrittsöffnung 4 in das Arbeitsgerät 1 ein. Im Ausführungsbeispiel ist zusätzlich vorgesehen, dass Kühlluft durch die untere Eintrittsöffnung 11 eintreten kann. Die Kühlluft durchströmt die Eintrittsöffnung 4 in Richtung der Längsrichtung 50. Durch die Eintrittsöffnung 4 tritt die Kühlluft zunächst in den Raum zwischen dem Filterdeckel 13 und dem Luftfilter 12 ein. Anschließend durchströmt die Kühlluft den Luftfilter 12 und die dahinter angeordnete Gehäuseöffnung 15. Hierbei strömt die Kühlluft im Ausführungsbeispiel in Richtung quer zur Werkzeugebene E in das Innere des Außengehäuses 5. Es kann auch vorgesehen sein, dass die Kühlluft beim Durchtritt durch die Gehäuseöffnung 15 zunächst nur in eine Vertiefung des Außengehäuses 5 eintritt und erst anschließend in das Innere des Außengehäuses 5 durch eine weitere Öffnung vordringt. Dies ist im Ausführungsbeispiel nach den Figuren 9 bis 12 der Fall. Im Ausführungsbeispiel nach den Figuren 1 bis 8 strömt die Kühlluft in Richtung quer zur Längsrichtung 50 in das Innere des Außengehäuses 5. Durch die Gehäuseöffnung 15 tritt die Kühlluft in das Außengehäuse 5 des Arbeitsgeräts 1 ein. Im Inneren des Außengehäuses 5 strömt die Kühlluft dann entlang des Strömungspfads 26 in Aufwärtsrichtung 49 und zur Elektronik des als Elektromotor ausgebildeten Motors 7. Hierbei wird die Elektronik des Elektromotors gekühlt. Dann strömt die Kühlluft entgegen der Aufwärtsrichtung 49 zum als Elektromotor ausgebildeten Motor 7. Die Kühlluft verlässt das Arbeitsgerät 1 durch eine Öffnung im Boden 17.

Aufgrund der Anordnung des Luftfilters an der ersten Seitenfläche 21 kann die Filterfläche 39 sehr groß gestaltet sein. Außerdem ist der Luftfilter 12 dadurch leicht zugänglich und kann auf einfache und komfortable Weise ausgetauscht werden. Dadurch, dass die Kühlluft in Längsrichtung 50 durch die Eintrittsöffnung 4 in das Arbeitsgerät 1 eintritt, kann die Eintrittsöffnung 4 so gestaltet sein, dass eine effektive, in Richtung senkrecht zur Werkzeugebene E zeigende Fläche der Eintrittsöffnung 4, die vorstehend als Öffnung bezeichnet ist, klein ist. Die Eintrittsöffnung 4 kann dadurch sogar so gestaltet sein, dass diese effektive Fläche Null ist. Dadurch kann der Schmutz, der in Richtung senkrecht zur Werkzeugebene E in das Arbeitsgerät 1 gelangen würde, nicht oder nur in geringem Maß durch die Eintrittsöffnung 4 in das Arbeitsgerät 1 eintreten. Dies ist insbesondere während eines Fällschnitts mit dem als Motorkettensäge ausgebildeten Arbeitsgeräts 1 von großem Vorteil.

Die Figuren 9 bis 12 zeigen ein alternatives Ausführungsbeispiel, bei dem im Gegensatz zu den Ausführungsbeispielen nach den Figuren 1 bis 8 vorgesehen ist, dass die Kühlluft im Wesentlichen in Richtung quer, insbesondere in Richtung senkrecht zur Längsrichtung 50 in das Arbeitsgerät 1 eintritt. Im Ausführungsbeispiel nach Fig. 9 tritt die Kühlluft in Richtung quer, insbesondere in Richtung senkrecht zur Werkzeugebene E in das Arbeitsgerät 1 ein. Im Ausführungsbeispiel nach Fig. 9 ist eine seitliche Eintrittsöffnung 62 für den Eintritt von Kühlluft in das Arbeitsgerät 1 vorgesehen. Im Ausführungsbeispiel nach Fig. 9 bildet der Luftfilter 12 einen Teil der Außenseite des Arbeitsgeräts 1. Ansonsten trifft die vorstehende Beschreibung zu den Figuren 1 bis 8, insbesondere zu den Figuren 1 bis 4, auch auf die Ausführungsbeispiele nach den Figuren 9 bis 12 zu. Sich entsprechende Bauteile sind mit gleichen Bezugszeichen gekennzeichnet.

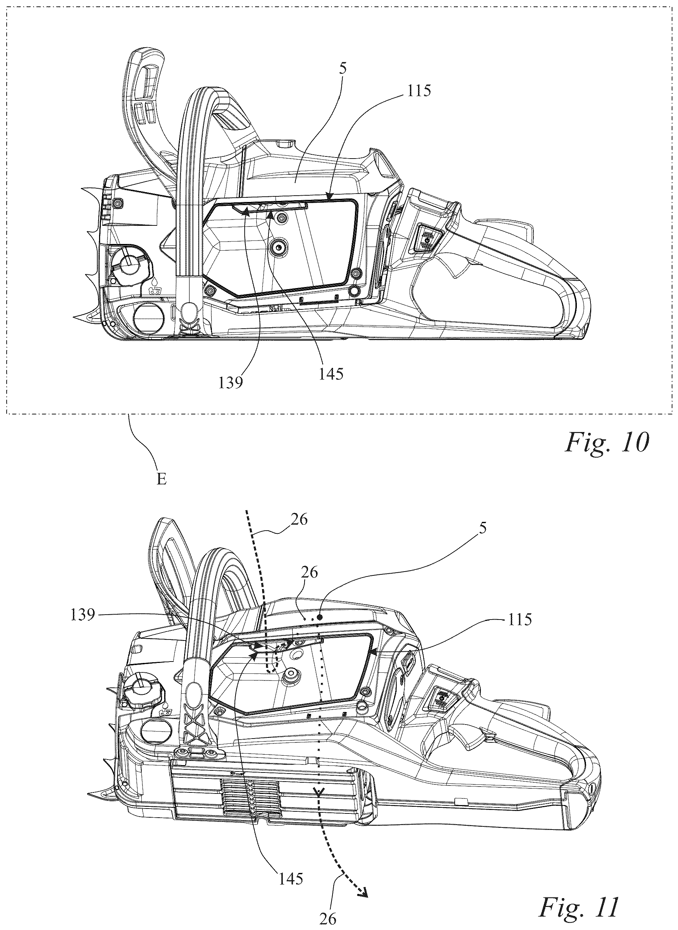

Beim Ansaugen von Kühlluft in das Innere des Arbeitsgeräts 1 nach den Figuren 9 bis 12 durch ein nicht dargestelltes Gebläse, insbesondere durch ein nicht dargestelltes Gebläserad, tritt die Kühlluft unmittelbar durch den Luftfilter 12 in das Arbeitsgerät 1 ein. Die Kühlluft folgt dem Strömungspfad 26 (Fig. 11).

In der alternativen Ausführung nach den Figuren 9 bis 12 ist vorgesehen, dass das Außengehäuse 5 eine Gehäuseöffnung 115 aufweist, die als Vertiefung in der ersten Seitenfläche 21 ausgebildet ist. In, an oder auf der als Vertiefung ausgebildeten Gehäuseöffnung 115 ist der Luftfilter 12 angeordnet. Die Gehäuseöffnung 115 durchdringt die Wand des Außengehäuses 5 nicht vollständig. Im Ausführungsbeispiel setzt der Luftfilter 12 die durch das Außengehäuse 5 gebildete Oberflächenkontur fort. Die Gehäuseöffnung 115 ist eine Mulde. Die Gehäuseöffnung 115 bildet einen Hohlraum aus, der von dem Luftfilter 12 begrenzt ist. Nach dem Eintritt das Arbeitsgerät 1 durch den Luftfilter 12 hindurch strömt die Kühlluft in den Hohlraum, bevor sie in das Innere des Außengehäuses 5 strömt. Durch die Gehäuseöffnung 115 ist zwischen dem Außengehäuse 5 und dem Luftfilter 12 ein Hohlraum ausgebildet. Die Gehäuseöffnung 115 besitzt einen Rand, an dem der Luftfilter 12 anliegt. Die Gehäuseöffnung 115 wird auch als Seitenvertiefung des Außengehäuses bezeichnet.

Das Außengehäuse 5 besitzt eine in den Figuren 10 bis 12 dargestellte Wanddurchdringungsöffnung 145. Die Wanddurchdringungsöffnung 145 durchdringt eine Wand des Außengehäuses 5 vollständig. Die Wanddurchdringungsöffnung 145 ist in der Gehäuseöffnung 115 des Außengehäuses 5 angeordnet. Die Wanddurchdringungsöffnung 145 ist in der als Vertiefung ausgebildeten Gehäuseöffnung 115 des Außengehäuses 5 angeordnet. Durch die Wanddurchdringungsöffnung 145 kann die Kühlluft von der als Vertiefung ausgebildeten Gehäuseöffnung 115 in das Innere des Außengehäuses 5 strömen.

Die in Fig. 9 dargestellte Werkzeugebene E verläuft in analoger Weise wie im Zusammenhang mit dem Ausführungsbeispiel nach Fig. 3 beschrieben. Die Werkzeugebene E besitzt eine in Fig. 3 dargestellte erste Seite 46. Die Werkzeugebene E besitzt eine zweite Seite 47. Die Werkzeugebene E trennt die erste Seite 46 von der zweiten Seite 47. Der Luftfilter 12 ist vollständig auf der ersten Seite 46 der Werkzeugebene E angeordnet. In Fig. 9 ist das Arbeitsgerät 1 in Ansicht auf die erste Seite 46 der Werkzeugebene E dargestellt.

Wie in Fig. 10 dargestellt ist die als Vertiefung ausgebildete Gehäuseöffnung 115 in Seitenansicht in Richtung senkrecht auf die erste Seite 46 der Werkzeugebene E und bei entferntem Filter 12 größer als die Wanddurchdringungsöffnung 145, insbesondere als die Fläche der Wanddurchdringungsöffnung 145.

Wie in Fig. 9 dargestellt besitzt die Gehäuseöffnung 15 in einer gedachten Projektion in Richtung senkrecht zur Werkzeugebene E auf die Werkzeugebene E die Öffnungsaußenkontur 28. Die Öffnungsaußenkontur 28 begrenzt die gedachte Öffnungsfläche 29. Die Öffnungsfläche 29 erstreckt sich in der Werkzeugebene E. In Fig. 9 sind die Öffnungsfläche 29 und die Filterfläche 39 mit derselben gestrichelten Linie schematisch eingezeichnet. Bei der Filterfläche 39 handelt es sich um eine Fläche, die von der Außenkontur der Projektion des Filters 12 in die Werkzeugebene E begrenzt ist, wie im Zusammenhang mit den Figuren 1 bis 8 beschrieben.

Die Öffnungsfläche 29, insbesondere die Filterfläche 39 beträgt mindestens 60 cm², insbesondere mindestens 70 cm², insbesondere mindestens 80 cm², insbesondere mindestens 85 cm², insbesondere mindestens 100 cm², insbesondere mindestens 125 cm², im Ausführungsbeispiel höchstens 100 cm², insbesondere höchstens 90 cm². Die Flächen sind in Projektion in die Werkzeugebene E gemessen. Diese Flächen sind insbesondere in Seitenansicht senkrecht auf die Werkzeugebene E gemessen.

Die in den Figuren 10 bis 12 dargestellte Wanddurchdringungsöffnung 145 weist eine tatsächliche Durchdringungsfläche auf. Insbesondere ist die tatsächliche Durchdringungsfläche eine, insbesondere im mathematischen Sinn, gekrümmte Fläche. Die tatsächliche Durchdringungsfläche entspricht dem integrierten Flächeninhalt der Wanddurchdringungsöffnung 145. Zweckmäßig ist die tatsächliche Durchdringungsfläche kleiner als die auf die Werkzeugebene E projizierte Öffnungsfläche 29, insbesondere als die Filterfläche 39.

Die Durchdrinungsfläche ist kleiner als die Filterfläche 39, insbesondere als die Öffnungsfläche 29.

Insbesondere beträgt die tatsächliche Durchdringungsfläche höchstens 40%, insbesondere höchstens 30%, insbesondere höchstens 20%, insbesondere höchstens 10%, insbesondere höchstens 6% der auf die Werkzeugebene E projizierten Öffnungsfläche 29, insbesondere der auf die Werkzeugebene E projizierten Filterfläche 39.

Insbesondere beträgt die tatsächliche Durchdringungsfläche mindestens 1%, insbesondere mindestens 3%, insbesondere mindestens 5%, insbesondere mindestens 10% der auf die Werkzeugebene E projizierten Öffnungsfläche 29, insbesondere der auf die Werkzeugebene E projizierten Filterfläche 39.

Insbesondere beträgt die tatsächliche Durchdringungsfläche mindestens 200 mm², insbesondere mindestens 300 mm², insbesondere mindestens 400 mm².

Insbesondere beträgt die tatsächliche Durchdringungsfläche höchstens 1200 mm², insbesondere höchstens 800 mm², insbesondere höchstens 600 mm².

Insbesondere beträgt die auf die Werkzeugebene E projizierten Öffnungsfläche 29, insbesondere die auf die Werkzeugebene E projizierten Filterfläche 39, mindestens 60 cm², insbesondere mindestens 80 cm².

Insbesondere beträgt die auf die Werkzeugebene E projizierten Öffnungsfläche 29, insbesondere die auf die Werkzeugebene E projizierten Filterfläche 39, höchstens 100 cm², insbesondere höchstens 90 cm².

Durch die Wanddurchdringungsöffnung 145 kann Kühlluft in einen Gehäuseinnenraum 139 des Außengehäuses 5 angesaugt werden. Durch die Wanddurchdringungsöffnung 145 kann Kühlluft in den Gehäuseinnenraum 139 des Außengehäuses 5 vordringen. Die Vertiefung, die durch die Gehäuseöffnung 115 gebildet ist, ist zwischen, insbesondere funktional zwischen, insbesondere bezüglich des Wegs des Kühlluft entlang des Kühlluftpfads 26 zwischen, dem Luftfilter 12 und der Wanddurchdringungsöffnung 145 angeordnet. Der Kühlluftpfad 26 ist im Bereich außerhalb des Gehäuseinnenraums 139 in Fig. 11 gestrichelt dargestellt. Im Bereich innerhalb des Gehäuseinnenraums 139 ist der Kühlluftpfad 26 gepunktet dargestellt. Im Bereich der durch die Gehäuseöffnung 115 gebildeten Vertiefung befindet sich die Kühlluft außerhalb des Gehäuseinnenraums 139. Erst mit Durchtritt der Kühlluft durch die Wanddurchdringungsöffnung 145 tritt die Kühlluft in den Gehäuseinnenraum 139 des Außengehäuses 5 ein. Im Gehäuseinnenraum 139 sind der Motor 7 und ein nicht dargestelltes Gebläse, insbesondere ein nicht dargestelltes Gebläserad angeordnet.

Der Luftfilter 12 deckt sowohl die als Vertiefung ausgebildete Gehäuseöffnung 115 als auch die Wanddurchdringungsöffnung 145 ab.

Zwischen dem Luftfilter 12 und der Wanddurchdringungsöffnung 145 ist die Kühlluft gefiltert. Der Bereich entlang des in Fig. 11 gepunktet eingezeichneten Strömungspfads 26 stromabwärts des Luftfilters 12 wird als Reinluftraum 114 bezeichnet. Die als Vertiefung im Außengehäuse 5 ausgebildete Gehäuseöffnung 15 ist Teil des Reinluftraums 114.

Die als Vertiefung im Außengehäuse 5 ausgebildete Gehäuseöffnung 15 begrenzt den Strömungspad 26 im Bereich zwischen dem Luftfilter 12 und der Wanddurchdringungsöffnung 145 trichterförmig. Nach der Filterung der Kühlluft durch den Luftfilter 12 wird der effektive Strömungsquerschnitt entlang des Strömungspfads 26 verkleinert. Auf dem Weg vom Luftfilter 12 zu der Wanddurchdringungsöffnung 145 verringert sich der Strömungsquerschnitt für die Kühlluft auf weniger als 30%, insbesondere auf weniger als 20%, insbesondere auf weniger als 20%, insbesondere auf weniger als 10%, insbesondere auf weniger als 6% insbesondere auf mehr als 2%, insbesondere auf mehr als 4% des Strömungsquerschnitts beim Durchgang durch den Luftfilter 12, insbesondere der Öffnungsfläche 29, insbesondere der Filterfläche 39.

Im Ausführungsbeispiel nach den Figuren 9 bis 12 ist der Luftfilter 12 Bestandteil der einer Außenfläche des Arbeitsgeräts 1. Der Luftfilter 12 bildet einen Teil der Außenseite des Arbeitsgeräts 1. Der Luftfilter 12 setzt die ersten Seitenfläche 21 des Außengehäuses 5, insbesondere im Bereich der als Vertiefung ausgebildeten Gehäuseöffnung 115 fort. Bei diesem Ausführungsbeispiel tritt die Kühlluft initial durch den Luftfilter 12 in das Arbeitsgerät 1 ein. Anschließend verringert sich der Strömungsquerschnitt für die Kühlluft auf dem Weg zur Wanddurchdringungsöffnung 145. Hierbei dient die als Vertiefung ausgebildete Gehäuseöffnung 15 als Trichter. Durch den initial großen Strömungsquerschnitt wird die Kühlluft effizient durch den Luftfilter 12 gefiltert. Aufgrund der Reduzierung des Strömungsquerschnitts bis zur Wanddurchdringungsöffnung 145 wird die Strömungsgeschwindigkeit der Kühlluft signifikant erhöht. Dadurch kann mit der Kühlluft im Gehäuseinnenraum 139 eine gute Kühlwirkung erzielt werden.

## Patentansprüche

1. Motorkettensäge oder Trennschleifer mit einem Werkzeug (6) mit einer Werkzeugebene (E) und einem Bediengriff (34), wobei eine Längsrichtung (50) in Richtung von dem Bediengriff (34) zu dem Werkzeug (6) verläuft, wobei die Motorkettensäge oder der Trennschleifer umfasst:
- ein Außengehäuse (1) mit einer Gehäuseöffnung (15) zum Ansaugen von Kühlluft in das Außengehäuse (5),
- einen Elektromotor (7), der in dem Außengehäuse (5) angeordnet ist und zum Antrieb des Werkzeugs (6) dient und
- einen Luftfilter (12), der an oder in der Gehäuseöffnung (15, 115) angeordnet ist,
wobei die Motorkettensäge oder der Trennschleifer in einer Abstellposition auf einer Horizontalebene abgestellt werden kann, wobei das Außengehäuse (5) einen in der Abstellposition der Horizontalebene zugewandten Boden (17) besitzt, wobei das Außengehäuse (5) eine dem Boden (17) gegenüberliegende Gehäusedecke (20) aufweist, wobei das Außengehäuse (5) eine Seitenfläche (21) aufweist, die die Gehäusedecke (20) und den Boden (17) miteinander verbindet und die Motorkettensäge oder den Trennschleifer entlang der Längsrichtung (50) in Richtung senkrecht zur Werkzeugebene (E) begrenzt,
**dadurch gekennzeichnet, dass** der Luftfilter (12) an der Seitenfläche (21) des Außengehäuses (5) angeordnet ist, und dass das Außengehäuse (5) in einer Seitenansicht senkrecht auf die Werkzeugebene (E) eine Gehäuseaußenkontur (8) besitzt, die in einer gedachten Projektion in Richtung senkrecht zur Werkzeugebene (E) auf die Werkzeugebene (E) eine gedachte Gehäusefläche (9) begrenzt, dass der Luftfilter (12) in einer gedachten Projektion in Richtung senkrecht zur Werkzeugebene (E) auf die Werkzeugebene (E) eine Filteraußenkontur (38) besitzt, die eine gedachte Filterfläche (39) begrenzt, und dass die Filterfläche (39) mindestens 5%, insbesondere mindestens 10%, insbesondere mindestens 15%, insbesondere mindestens 18% der Gehäusefläche (9) beträgt.

2. Motorkettensäge oder Trennschleifer nach Anspruch 1,
**dadurch gekennzeichnet, dass** die Gehäuseöffnung (15, 115) an der Seitenfläche (21) des Außengehäuses (5) angeordnet ist, und dass die Gehäuseöffnung (15, 115) in einer gedachten Projektion in Richtung senkrecht zur Werkzeugebene (E) auf die Werkzeugebene (E) eine Öffnungsaußenkontur (28) besitzt, die eine gedachte Öffnungsfläche (29) begrenzt, und dass die Öffnungsfläche (29) mindestens 5%, insbesondere mindestens 10% der Gehäusefläche (9) beträgt.

3. Motorkettensäge oder Trennschleifer nach Anspruch 1 oder 2,
**dadurch gekennzeichnet, dass** die Filterfläche (39), insbesondere die Öffnungsfläche (29), mindestens 60 cm², insbesondere mindestens 80 cm², beträgt.

4. Motorkettensäge oder Trennschleifer nach einem der Ansprüche 1 bis 3, **dadurch gekennzeichnet, dass** der Filter (12) durch ein einziges, insbesondere zentrales, Befestigungselement (14) an dem Außengehäuse (5) befestigbar ist.

5. Motorkettensäge oder Trennschleifer nach einem der Ansprüche 1 bis 4, **dadurch gekennzeichnet, dass** das Außengehäuse (5) einen Aufnahmeschacht (22) für einen Akkupack aufweist, dass der Akkupack in einer Einschubrichtung (48) durch eine Aufnahmeöffnung (23) des Aufnahmeschachts (22) in den Aufnahmeschacht (22) einschiebbar ist, und dass die Seitenfläche (21) frei von der Aufnahmeöffnung (23) ist.

6. Motorkettensäge oder Trennschleifer nach Anspruch 5,
**dadurch gekennzeichnet, dass** die Einschubrichtung (48) parallel zur Werkzeugebene (E) verläuft.

7. Motorkettensäge oder Trennschleifer nach Anspruch 5 oder 6,
**dadurch gekennzeichnet, dass** sich gedachte Projektionen des Luftfilters (12) und des Aufnahmeschachts (22) in Richtung senkrecht zur Werkzeugebene (E) auf die Werkzeugebene (E) in der Werkzeugebene (E) überlappen.

8. Motorkettensäge oder Trennschleifer nach einem der Ansprüche 1 bis 7, **dadurch gekennzeichnet, dass** der Luftfilter (12) ein Feinfilter ist.

9. Motorkettensäge oder Trennschleifer nach einem der Ansprüche 1 bis 8, **dadurch gekennzeichnet, dass** der Luftfilter (12) eine tatsächliche Fläche aufweist, dass die tatsächliche Fläche eine gekrümmte Fläche ist, dass die tatsächliche Fläche dem integrierten Flächeninhalt einer Seite der Oberfläche des Luftfilters (12), insbesondere eines Luftfilterelements des Luftfilters (12) entspricht, dass die tatsächliche Fläche größer als die auf die Werkzeugebene (E) projizierte Filterfläche (39) ist, insbesondere dass die tatsächliche Fläche mindestens 140%, insbesondere mindestens 160%, insbesondere mindestens 200% der auf die Werkzeugebene (E) projizierten Filterfläche (39) beträgt, insbesondere dass die tatsächliche Fläche des Luftfilters (12) mindestens 150 cm², insbesondere mindestens 225 cm² beträgt.

10. Motorkettensäge oder Trennschleifer nach Anspruch 9,
**dadurch gekennzeichnet, dass** die tatsächliche Fläche des Luftfilters (12) mindestens 8%, insbesondere mindestens 10%, insbesondere mindestens 15%, insbesondere mindestens 35% der auf die Werkzeugebene (E) projizierten Gehäusefläche (9) beträgt.

11. Motorkettensäge oder Trennschleifer nach einem der Ansprüche 1 bis 10, **dadurch gekennzeichnet, dass** der Luftfilter (12) einen Teil der Außenseite des Arbeitsgeräts (1) bildet, dass die Gehäuseöffnung (15, 115) als Vertiefung in der ersten Seitenfläche (21) ausgebildet ist, so dass zwischen einer Außenseite der ersten Seitenfläche (21) und dem Luftfilter (12) ein Hohlraum ausgebildet ist, und dass in der Gehäuseöffnung (15, 115) eine Wanddurchdringungsöffnung (145) ausgebildet ist, die eine Wand des Außengehäuses (5) vollständig durchdringt.

12. Motorkettensäge oder Trennschleifer nach Anspruch 11,
**dadurch gekennzeichnet, dass** die Wanddurchdringungsöffnung (145) eine Durchdringungsfläche besitzt, und dass die Durchdringungsfläche kleiner als die Filterfläche (39) ist.

13. Motorkettensäge oder Trennschleifer nach Anspruch 12,
**dadurch gekennzeichnet, dass** die Durchdringungsfläche höchstens 30% der Filterfläche (39) beträgt.

14. Motorkettensäge nach Anspruch 12 oder 13,
**dadurch gekennzeichnet, dass** die Durchdringungsfläche höchstens 1500 mm² beträgt.

15. Motorkettensäge oder Trennschleifer nach einem der Ansprüche 1 bis 14, **dadurch gekennzeichnet, dass** die Motorkettensäge oder der Trennschleifer eine Eintrittsöffnung (4) für den Eintritt von Kühlluft in die Motorkettensäge oder in den Trennschleifer umfasst, dass die Motorkettensäge oder der Trennschleifer einen Luftfilter (12) zur Filterung der Kühlluft umfasst, dass der Luftfilter (12) ausschließlich auf einer ersten Seite der Werkzeugebene (E) angeordnet ist, dass die Eintrittsöffnung (4) so angeordnet ist, dass Kühlluft in Längsrichtung (50) durch die Eintrittsöffnung (4) strömen kann, dass das Außengehäuse (5) in einer Seitenansicht senkrecht auf die erste Seite (46) der Werkzeugebene (E) eine Gehäuseaußenkontur (8) besitzt, die in einer gedachten Projektion in Richtung senkrecht zur Werkzeugebene (E) auf die Werkzeugebene (E) eine gedachte Gehäusefläche (9) begrenzt, und dass die Motorkettensäge oder der Trennschleifer in der Seitenansicht senkrecht auf die erste Seite (46) der Werkzeugebene (E) innerhalb der Gehäuseaußenkontur (8) über mindestens 95% der Gehäusefläche (9) frei von Öffnungen für den Eintritt von Kühlluft in die Motorkettensäge oder in den Trennschleifer ist.
